# EUROPEAN PATENT APPLICATION

(11) **EP 4 557 478 A1**
(43) Date of publication of application: **21.05.2025**
(21) Application number: 22963207.0
(22) Date of filing: 28.10.2022
(51) Int. Cl.: H01M 50/244, H01M 50/249, H01M 10/6568

(54) **BATTERY, ENERGY STORAGE APPARATUS, AND ELECTRICAL DEVICE**

(71) Applicant: Contemporary Amperex Technology (Hong Kong) Limited, Hong Kong (HK)
(72) Inventor: YANG, Hui, Ningde, Fujian 352100 (CN); QIN, Lun, Ningde, Fujian 352100 (CN)
(74) Representative: Kraus & Lederer PartGmbB
(86) International application number: PCT/CN2022/128429
(87) International publication number: WO 2024/087226

(57) **Abstract**

The present disclosure discloses a battery, an energy storing device, and an electrical equipment. The battery includes battery cells; a first box; and a second box. The second box is connected to the first box to jointly form an enclosed space for accommodating battery cells. The first box includes a first side wall and a bottom wall. The first side wall is connected to the second box and is of a non-closed structure along the circumference of the bottom wall. The technical solution provided in the present disclosure can improve the energy density of the battery.

## Description

### Technical Field

The present disclosure relates to the field of battery technology, and in particular to a battery, an energy storing device, and an electrical equipment.

### Background Art

Energy conservation and emission reduction are key to the sustainable development of the automotive industry, and electric vehicles have become an important component of the sustainable development of the automotive industry due to their advantages in energy conservation and environmental protection. For electric vehicles, battery technology is an important factor related to their development.

In the development of battery technology, how to improve the energy density of batteries is an urgent technical problem that needs to be solved in the battery technology.

### Summary

The present disclosure provides a battery, an energy storing device, and an electrical equipment. The technical solution provided in the present disclosure can improve the energy density of the battery.

The present disclosure is implemented through the following technical solution.

In the first aspect, the present disclosure provides a battery comprising a battery cell; a first box; and a second box, wherein the second box is connected to the first box to jointly form a closed space for accommodating the battery cell, wherein the first box comprises a first side wall and a bottom wall, wherein the first side wall is connected to the second box body, and the first side wall is a non-closed structure along a circumference of the bottom wall.

At present, the side wall of the first box is of a closed structure, and there is a draft angle in the first box, which causes interference between the side wall and the battery cell, making the part of the enclosed space corresponding to the draft angle unusable. Therefore, in the above solution, the first side wall is set as a non-closed structure (i.e., part of the side wall of the first box is canceled), thereby directly connecting a portion of the side wall of the second box (corresponding to the portion of the first box that is not equipped with a first side wall) to the bottom wall of the first box, the interference of this portion of the side wall of the first box with the battery cells in the enclosed space can be reduced, and the volume of the enclosed space can be correspondingly increased, which can accommodate more battery cells or electronic components, thereby increasing the volume energy density of the battery.

According to some embodiments of the present disclosure, the second box is connected to an edge of the bottom wall that is not provided with the first side wall.

In the above solution, the second box is connected to the edge of the bottom wall that is not provided with the first side wall, which can maximize the volume of the enclosed space and make the battery have a higher volume energy density.

According to some embodiments of the present disclosure, the bottom wall comprises a first region and a second region, wherein the first region and the second region are arranged side by side along a first direction, the first side wall is arranged at the edge of the first region, the edge of the second region is not provided with the first side wall, and the first direction is perpendicular to a thickness direction of the bottom wall.

In the above solution, the edge of the second region set side by side with the first region along the first direction is not equipped with a first side wall. The part of the second box corresponding to the first region is directly connected to the bottom wall, which will increase the space above the part without the side wall in the second region, so as to improve the utilization rate of the enclosed space, and thus maximize the volume energy density of the battery.

According to some embodiments of the present disclosure, the battery further comprises electronic components, which are accommodated in the enclosed space and at least partially set in the second region, and the battery cell is set in the first region.

In the above solution, by removing the side wall at the edge of the second region, the space above the second region is increased. Along the thickness direction of the bottom wall, the size of electronic components is smaller than that of battery cells. Therefore, setting smaller electronic components in the second region and battery cells in the first region can reduce the occupation of electronic components in the first region. In this way, more battery cells can be placed in the first region, improving the volumetric energy density of the battery.

According to some embodiments of the present disclosure, the first region comprises a first edge and two second edges, wherein the two second edges are set opposite to each other in a second direction, the first edge connects the two second edges, the first side wall is set at the first edge and the two second edges, and the second direction is perpendicular to the thickness direction of the bottom wall.

In the above solution, by setting the first side wall at the first edge and two second edges, the structural strength of the first box can be ensured, and the structural strength of the battery can be ensured, making the battery cell have higher safety.

According to some embodiments of the present disclosure, the two second edges extend along the first direction, and the first direction, the second direction, and the thickness direction of the bottom wall are perpendicular to each other.

In the above solution, due to the fact that the first direction, second direction, and thickness direction of the bottom wall are perpendicular to each other, the first box is a square box. Compared with non-square boxes, square boxes can be efficiently manufactured, improving the manufacturing efficiency of batteries.

According to some embodiments of the present disclosure, the length of the second edge is greater than the length of the first edge.

In the above solution, along the first direction, the edge opposite to the first edge of the bottom wall is an edge without a first side wall, so the edge with a smaller length of the bottom wall is not equipped with a first side wall, which can improve the structural strength of the first box.

According to some embodiments of the present disclosure, the first box further comprises a first flange, which extends outward from one end of the first side wall away from the bottom wall, and the first side wall is connected to the second box through the first flange.

In the above solution, by setting a first flange, it is convenient and effective to connect the first side wall and the second box, ensuring a stable and sealed connection between the first side wall and the second box, and ensuring the safety of the battery cells in the enclosed space.

According to some embodiments of the present disclosure, the second region extends beyond the two second edges along the second direction; and the first box further comprises a transition section, wherein the end of the first flange and the portion of the second region beyond the second edges are connected through the transition section.

In the above solution, along the second direction, the connection between the first flange and the second region is achieved by setting the second region beyond the second edges and setting a transition section, ensuring that the first box has a flat outer contour and facilitating connection with the second box.

According to some embodiments of the present disclosure, the transition section is inclined relative to the bottom wall.

In the above solution, by tilting the transition section, the sealing between the first flange and the second box can be improved, ensuring the safety of the battery.

According to some embodiments of the present disclosure, the inclination angle of the transition section relative to the bottom wall is α, meeting 0° < α≤ 60°.

In the above solution, the inclination angle of the transition section from the bottom wall is set to be no more than 60° to reduce the risk of sealing failure of the second box and the first flange, ensuring the sealing between the first box and the second box.

According to some embodiments of the present disclosure, the second box comprises a top wall, a second side wall, and a second flange, wherein the second side wall is provided at the edge of the top wall, and the second flange extends outward from one end of the second side wall away from the top wall; and the second flange comprises a first part, a second part, and a third part, wherein the first part is connected to the edge of the bottom wall without the first side wall, the second part is correspondingly set with the transition section, and the third part is connected to the first flange.

In the above solution, the second box is connected to the edge of the bottom wall without the first side wall, the transition section, and the first flange through the second flange, so as to ensure the sealing between the first box and the second box. Meanwhile, the second side wall surrounds the edge of the top wall to form one chamber, thereby increasing the volume of the enclosed space and accommodating more battery cells, resulting in a higher volumetric energy density of the battery.

According to some embodiments of the present disclosure, the second box comprises a top wall, a second side wall, and a second flange, wherein the second side wall is provided at the partial edge of the top wall, and the second flange extends outward from one end of the second side wall away from the top wall; and the second flange comprises a first part, and a second part, wherein the first part is connected to the edge of the bottom wall without the first side wall, the second part is correspondingly set with the transition section, and the edge of the top wall without the second side wall is connected to the first flange.

In the above solution, the main body of the second box is in the shape of a plate, and a second side wall is set at the partial edge of the main body to correspond to the part where the first box does not have a first side wall. Therefore, the second box has the advantages of simple structure and low material cost. At the same time, the second box is connected to the edge of the bottom wall without a first side wall and transition section through a second flange, and is connected to the first flange through the edge of the plate-like top wall to ensure the sealing between the first box and the second box, thereby ensuring the safety of the battery.

According to some embodiments of the present disclosure, the second part is inclined relative to the first part.

In the above solution, the second part is set correspondingly to the transition section. When the transition section is tilted, the stability and sealing of the connection between the second part and the transition section can be improved by tilting the second part, ensuring the safety of the battery.

According to some embodiments of the present disclosure, the second part and the transition section are parallel to each other.

In the above solution, the second part is parallel to the transition section to ensure that the second part can be effectively and hermetically connected to the transition section, ensuring the stability and sealing of the connection between the first and second boxes, and thus ensuring the safety of the battery.

According to some embodiments of the present disclosure, the bottom wall, the first side wall, and the first flange are integrally formed.

In the above solution, by integrally forming the first side wall and first flange on the bottom wall, the structural strength of the first box can be improved, ensuring that the battery cell is safely placed in the enclosed space.

According to some embodiments of the present disclosure, the first box is formed by stamping, die-casting, or bending.

In the above solution, manufacturing the first box through stamping, die-casting, or bending can make the first box have higher manufacturing efficiency, so as to make the battery have higher manufacturing efficiency.

According to some embodiments of the present disclosure, the battery comprises a flow channel for accommodating a heat exchange medium to regulate the temperature of the battery cell; and the battery further comprises an inlet pipe and an outlet pipe, both of which are communicated with the flow channel, and both of which are located on an outer side of the enclosed space.

In the above solution, the temperature of the battery cells is adjusted by setting flow channels to reduce the risk of thermal runaway of the battery and improve the safety of the battery. At the same time, by placing the inlet and outlet pipes at the outside of the enclosed space, it is convenient to connect the external pipes with the inlet and outlet pipes to achieve the circulation of the heat exchange medium.

According to some embodiments of the present disclosure, the inlet pipe and the outlet pipe are both located on one side of the bottom wall facing the second box.

In the above solution, the inlet pipe and the outlet pipe are both arranged facing one side of the bottom wall facing the second box, in order to make reasonable use of the height space of the battery and achieve the insertion and removal between the external pipes and the inlet and outlet pipes. Compared with the solution of horizontally setting the inlet and outlet pipes, it can reduce the additional horizontal size of the battery caused by the insertion and removal of external pipes, thereby reducing the volume of the entire battery and achieving the goal of improving the volume energy density of the battery.

According to some embodiments of the present disclosure, the inlet pipe and the outlet pipe do not exceed the second box along the direction of the bottom wall towards the second box.

In the above solution, the inlet and outlet pipes are set to not exceed the second box to ensure that the insertion positions of the inlet and outlet pipes and the external pipes are within the height range of the battery.

According to some embodiments of the present disclosure, the inlet pipe and the outlet pipe are both inclined or vertically arranged relative to the bottom wall.

In the above solution, the direction of insertion or removal between the inlet and outlet pipes and the external pipes is inclined or perpendicular to the bottom wall, in order to make reasonable use of the height space of the battery to achieve insertion or removal without occupying additional space, thereby ensuring the volume energy density of the battery.

According to some embodiments of the present disclosure, the second box comprises a top wall, a second side wall, and a second flange, wherein the second side wall is provided at the edge of the top wall, and the second flange extends outward from one end of the second side wall away from the top wall; and the second flange is equipped with a first avoidance part and a second avoidance part, and the inlet pipe and the outlet pipe respectively pass through the first avoidance part and the second avoidance part.

In the above solution, setting a second flange can improve the sealing of the first and second boxes, ensuring the sealing of the battery. In order to avoid the situation where the second flange is adjusted towards the direction of the enclosed space to avoid the inlet and outlet pipes, resulting in a decrease in the volume of the enclosed space, the first and second avoidance parts are set to respectively avoid the inlet and outlet pipes, thereby ensuring that the volume of the enclosed space is not affected and making the battery have a higher energy density.

According to some embodiments of the present disclosure, the first avoidance part and the second avoidance part are notches set at the edge of the second flange.

In the above solution, the first and second avoidance parts are notches formed at the edge of the second flange, and their forming is simple and convenient.

According to some embodiments of the present disclosure, the flow channel is formed inside the bottom wall, and the inlet pipe and the outlet pipe are both set at the edge of the bottom wall without the first side wall.

In the above solution, the flow channel is set inside the bottom wall. By setting the inlet and outlet pipes at the edge of the bottom wall without a first side wall, it is reasonable to avoid the first side wall, so as to avoid interference between the inlet and outlet pipes and the first side wall, reduce the difficulty of battery assembly, and improve the manufacturing efficiency of the battery.

According to some embodiments of the present disclosure, the connection between the inlet pipe and the bottom wall, and the connection between the outlet pipe and the bottom wall are both located on the outer side of the enclosed space.

In the above solution, the connection between the inlet pipe and the bottom wall, and the connection between the outlet pipe and the bottom wall are set on the outside of the enclosed space, which can avoid forming holes on the first or second box to lead the inlet and outlet pipes out to the outside of the enclosed space. Therefore, it can reduce the sealing treatment on the opening, ensure the sealing of the battery, and reduce the assembly difficulty of the battery.

According to some embodiments of the present disclosure, the inlet pipe and the outlet pipe are respectively provided at two corners of the bottom wall.

In the above solution, setting the inlet and outlet pipes at the corners of the bottom wall can avoid the invasion of the enclosed space by the inlet and outlet pipes, ensuring that the battery has a higher energy density.

According to some embodiments of the present disclosure, the bottom wall comprises a first substrate and a second substrate arranged in a stacked manner, wherein the second substrate is arranged on one side of the first substrate facing away from the second box, and the flow channel is formed between the second substrate and the first substrate.

In the above solution, the first substrate and the second substrate are stacked to form a flow channel, making the bottom wall structure simple and easy to manufacture.

According to some embodiments of the present disclosure, the first side wall is connected to the first substrate.

In the above solution, the first substrate is closer to the second box than the second substrate, so setting the first side wall on the first substrate can easily connect the first box and the second box, thereby reducing the difficulty of battery assembly.

According to some embodiments of the present disclosure, a groove is formed on the surface of the second substrate facing the first substrate, and the surface of the first substrate facing the second substrate and the groove jointly form the flow channel.

In the above solution, a groove is formed on the surface of the second substrate through a simple process (such as stamping, etc.) to form a flow channel together with the first substrate, so that the heat exchange medium can effectively regulate the temperature of the battery cell and improve the safety of the battery.

According to some embodiments of the present disclosure, the battery further comprises a thermal management component, wherein the flow channel is provided in the thermal management component, the thermal management component is provided in the enclosed space, and both the inlet pipe and the outlet pipe are provided in the thermal management component.

In the above solution, a thermal management component is set to regulate the temperature of the battery cells, making the battery have higher safety.

According to some embodiments of the present disclosure, the battery further comprises a frame provided on one side of the first box facing away from the second box, wherein the frame is configured to support the first box.

In the above solution, a frame is set up to support the first box, ensuring that the battery has higher structural strength and ensuring the safety of the battery.

According to some embodiments of the present disclosure, the first box further comprises a first flange, wherein the first flange extends outward from one end of the first side wall away from the bottom wall, and the first side wall is connected to the second box through the first flange; and the frame comprises an edge beam, wherein the edge beam is arranged along the first flange, and the first flange is overlapped with the edge beam.

In the above solution, the edge is set along the flange of the first box, and supports the first flange, so as to make reasonable use of the height space caused by the first flange and the first side wall of the first box, ensuring that the battery has a lower center of gravity and higher stability.

According to some embodiments of the present disclosure, a first cavity is formed between the first side wall and the edge beam.

In the above solution, the first cavity formed by the first side wall and edge beam can collapse and absorb energy after the battery is impacted, improving the impact resistance of the battery and making the battery have higher safety.

According to some embodiments of the present disclosure, the edge beam comprises a first support surface and a second support surface, wherein along the thickness direction of the bottom wall, the first support surface protrudes from the second support surface, the first flange overlaps with the first support surface, and the bottom wall overlaps with the second support surface.

In the above solution, the first support surface is used to support the first flange, and the second support surface is used to support the bottom wall to ensure the support of the edge beam for the first box and to ensure that the battery has higher structural strength.

According to some embodiments of the present disclosure, a second cavity is formed inside the edge beam.

In the above solution, the second cavity formed inside the edge beam can collapse and absorb energy after the battery is impacted, improving the impact resistance of the battery and making the battery have higher safety.

According to some embodiments of the present disclosure, the edge beam is formed by bending a plate-shaped component.

In the above solution, the edge beam is formed by bending plate-shaped components, which can improve the manufacturing efficiency of the edge beam and ensure the manufacturing efficiency of the battery.

According to some embodiments of the present disclosure, a second cavity is formed inside the edge beam; and the edge beam comprises a first connecting wall bent relatively to the first support surface and a second connecting wall bent relatively to the second support surface, wherein the first connecting wall is stacked and welded to the second connecting wall.

In the above solution, by stacking and welding the first connecting wall bent to the first support surface and the second connecting wall bent to the second support surface, the structural strength of the edge beam can be improved, ensuring the support effect on the first box.

According to some embodiments of the present disclosure, the end of at least one of the first connecting wall and the second connecting wall comprises an extension section, which extends into the second cavity and abuts against the bottom edge of the edge beam, and the bottom edge is arranged opposite to the first support surface and the second support surface.

In the above solution, by setting an extension section, the extension section and the bottom edge of the edge beam can abut against to each other, thereby improving the structural strength of the edge beam and ensuring the support effect on the first box.

According to some embodiments of the present disclosure, the extension section abuts on the middle area of the bottom edge.

In the above solution, the extension section abuts against the middle area of the bottom edge to ensure even stress on the bottom edge and ensure stable structure of the edge beam to effectively support the first box.

According to some embodiments of the present disclosure, the extension section is welded to the bottom edge.

In the above solution, the extension section is connected to the bottom edge by welding, making the edge beam structure stable and effectively supporting the first box.

According to some embodiments of the present disclosure, the cross-section of the edge beam is L-shaped.

According to some embodiments of the present disclosure, the edge beam comprises a first edge beam and two second edge beams, wherein the two second edge beams are arranged opposite to each other in a second direction, the first edge beam is connected to the two second edge beams, and the second direction is perpendicular to the thickness direction of the bottom wall.

In the above solution, the first and second edge beams are set to correspond to the first and second edges of the first box, respectively, to ensure the support of the edge beam for the first box and ensure higher safety of the battery.

According to some embodiments of the present disclosure, the frame further comprises a first bracket, which is connected to the two second edge beams.

In the above solution, by setting a first bracket to connect the two second edge beams, the structural strength of the frame can be improved, thereby effectively supporting the first box.

According to some embodiments of the present disclosure, the first bracket and the first edge beam are spaced apart along the first direction, and the first direction, the second direction, and the thickness direction of the bottom wall are perpendicular to each other.

In the above solution, along the first direction, the first bracket and the first edge beam are spaced apart and both connected to the second edge beam, which can effectively improve the structural strength of the frame and ensure higher safety of the battery.

According to some embodiments of the present disclosure, the first bracket is connected to the ends of the two second edge beams far away from the first edge beam.

In the above solution, the first bracket is connected to the ends of the two second edge beams far away from the first edge beam, which can effectively improve the structural strength of the frame and ensure that the first and second edge beams can effectively support the first box.

According to some embodiments of the present disclosure, the battery further comprises a cross beam, which is set on the bottom wall and separates the enclosed space into multiple accommodating spaces.

In the above solution, the enclosed space is divided into multiple accommodating spaces by setting cross beams to reasonably layout the battery cells and electronic components, ensuring the safety of the battery cells.

According to some embodiments of the present disclosure, the bottom wall is provided with a through hole, and the first bracket is connected to the cross beam through a fastener penetrating the through hole.

In the above solution, the first bracket is connected to the cross beams through fasteners, which can improve the stability of the connection between the frame and the first box, ensuring that the battery has a stable structure and higher safety.

According to some embodiments of the present disclosure, the frame further comprises a second bracket, which is connected to the first edge beam and the second edge beams.

In the above solution, the second bracket connects the first and second edge beams to ensure the stability of the connection between the first edge beam and the second edge beams, so that the frame has a stable structure and effectively supports the first box.

According to some embodiments of the present disclosure, the material of the frame is steel, and the material of the first box is aluminum alloy.

In the above solution, the material of the first box is aluminum alloy, which ensures that the battery has a lighter weight to improve the weight energy density of the battery. On the other hand, to ensure the structural strength of the battery, the frame can be made of steel with higher strength.

In the second aspect, the present disclosure also provides an energy storing device, comprising a battery as described in any one of the first aspect.

In the third aspect, the present disclosure also provides an electrical equipment comprising a battery as described in any one of the first aspect, wherein the battery is configured to provide electrical energy.

The above description is only an overview of the technical solution of the present disclosure. In order to have a clearer understanding of the technical means of the present disclosure, it can be implemented according to the content of the specification. In order to make the above and other purposes, features, and advantages of the present disclosure more obvious and understandable, the specific implementation methods of the present disclosure are hereby listed.

### Brief Description of Drawings

In order to more clearly illustrate technical solutions of embodiments of the present disclosure, drawings required for use in the embodiments will be described briefly below. It should be understood that the following drawings are merely illustrative of some embodiments of the present disclosure, which therefore should not be understood as a limitation to the scope. For those of ordinary skill in the art, other related drawings can also be obtained according to these drawings without any inventive effort.
FIG. 1 is a schematic view of the structure of the vehicle provided in some embodiments of the present disclosure;
FIG. 2 is a three-dimensional view of the battery provided in some embodiments of the present disclosure;
FIG. 3 is a three-dimensional exploded view of the battery provided in some embodiments of the present disclosure;
FIG. 4 is a three-dimensional view of the first box provided in some embodiments of the present disclosure;
FIG. 5 is an enlarged view of part A of FIG. 4;
FIG. 6 is a top view of the first box provided in some embodiments of the present disclosure;
FIG. 7 is a partially schematic view of the first box provided in some embodiments of the present disclosure;
FIG. 8 is an enlarged view of part B of FIG. 3;
FIG. 9 is a schematic view of the second box provided in some other embodiments of the present disclosure;
FIG. 10 is an enlarged view of part C of FIG. 9;
FIG. 11 is an enlarged view of part D of FIG. 3;
FIG. 12 is a locally sectional view of the first box provided in some embodiments of the present disclosure;
FIG. 13 is a schematic view of the second substrate provided in some embodiments of the present disclosure;
FIG. 14 is a schematic view of the first box and the frame provided in some embodiments of the present disclosure;
FIG. 15 is a three-dimensional exploded view of the first box and the frame provided in some embodiments of the present disclosure;
FIG. 16 is a locally sectional view of the edge beam and the first box provided in some embodiments of the present disclosure;
FIG. 17 is a locally sectional view of the frame provided in some embodiments of the present disclosure; and
FIG. 18 is a schematic view of the edge beam provided in some embodiments of the present disclosure.

Reference signs: 100-battery; 100a-battery cell; 100b-electronic component; 10-first box; 11-first side wall; 12-bottom wall; 12a-first region; 120-first edge; 121-second edge; 12b-second region; 13-first flange; 14-transition section; 15-first substrate; 16-second substrate; 160-groove; 20-second box; 21-top wall; 22-second side wall; 23-second flange; 230-first part; 231-second part; 232-third part; 233-first avoidance part; 234-second avoidance part; 30-flow channel; 31-inlet pipe; 32-outlet pipe; 40-frame; 41-edge beam; 41a-first cavity; 41b-second cavity; 410-first support surface; 411-second support surface; 412-first connecting wall; 413-second connecting wall; 414-bottom edge; 415-first connecting side; 416-second connecting side; 417-extension section; 41c-first edge beam; 41d-second edge beam; 42-first bracket; 42a-bump; 42b-first support edge; 42c-second support edge; 43-second bracket; 50-cross beam; 60-sealing member; x-first direction; y-second direction; z-thickness direction; 1000- vehicle; 200-controller; 300-motor.

### Detailed Description of Embodiments

The following will provide a further detailed description of the implementation method of the present disclosure in conjunction with the accompanying drawings and embodiments. The detailed description of the following embodiments and accompanying drawings are used to exemplify the principles of the present disclosure, but cannot be used to limit the scope of the present disclosure, that is, the present disclosure is not limited to the described embodiments.

Unless otherwise defined, all technical and scientific terms used in the present disclosure have the same meanings as those commonly understood by those skilled in the art to which the present disclosure belongs. The terms used in the present disclosure are merely for the purpose of describing specific embodiments, but are not intended to limit the present disclosure. The terms "comprise/include", "provide", and any variations thereof in the description and claims, as well as the brief description of the drawings described above of the present disclosure are intended to cover non-exclusive inclusions.

In the description of the embodiments of the present disclosure, the technical terms "first", "second", etc. are only used to distinguish different objects and cannot be understood as indicating or implying relative importance or implying the quantity, specific order, or primary and secondary relationship of the indicated technical features. In the description of the embodiments of the present disclosure, the meaning of "multiple" refers to two or more, unless otherwise expressly specified.

In the present disclosure, the phrase "embodiment" mentioned means that the specific features, structures, or characteristics described with reference to the embodiments may be encompassed in at least one embodiment of the present disclosure. The phrase at various locations in the description does not necessarily refer to the same embodiment, or an independent or alternative embodiment exclusive of another embodiment. Those skilled in the art should understand, in explicit and implicit manners, that an embodiment described in the present disclosure may be combined with another embodiment.

The term "and/or" in the description of the embodiments of the present disclosure is only a description for the association relationship of the associated object, indicating that there can be three types of relationships. For example, A and/or B can indicate three conditions: the presence of A, the presence of both A and B, and the presence of B. In addition, the character "/" in the present disclosure generally indicates that the associated objects before and after have an "or" relationship.

The term "multiple (a plurality of)" in the description of the embodiments of the present disclosure refers to two or more (including two), similarly, "multiple groups" refer to two or more groups (including two groups), and "multiple plates"refer to two or more plates (including two plates).

In the description of embodiments of the present disclosure, the orientation or positional relationship indicated by the technical terms "length", "width", "thickness", "up", and "down" is based on the orientation or positional relationship shown in the drawings, and they are only for facilitating describing the embodiments of the present disclosure and simplifying the description, rather than indicating or implying that the related apparatus or element must be in a specific orientation, or constructed or operated in a specific orientation, and therefore it cannot be understood as a limitation to the embodiments of the present disclosure.

In the description of the embodiments of the present disclosure, unless otherwise clearly stipulated and limited, the technical terms "mount", "interconnect", "connect" and "fix" should be understood in a broad sense, for example, it can be a fixed connection, a detachable connection, or an integral connection; it can be mechanical connection or electrical connection; and it can be a direct connection, an indirect connection through an intermediary, or an internal communication or interactive relationship between two components. For those of ordinary skill in the art, the specific meaning of the foregoing terms in the embodiments of the present disclosure may be understood according to specific circumstances.

The battery mentioned in the embodiments of the present disclosure refers to a single physical module that includes one or more battery cells to provide higher voltage and capacity. For example, the batteries mentioned in the present disclosure may include one or more battery cells. The battery also includes a first box and a second box. The first box and the second box are connected to form an enclosed space together, and the battery cells are arranged in the enclosed space to avoid liquid or other foreign objects from affecting the charging or discharging of the battery cells.

In the development of battery technology, how to improve the energy density of batteries is an urgent technical problem that needs to be solved in the battery technology.

At present, the first box includes a bottom wall and a first side wall. The inventor discovered that in order to improve the structural strength of the battery, the first side wall surrounds the edge of the bottom wall and is of a closed structure. However, further research by the inventor found that for the convenience of manufacturing and mold release, there is a draft angle in the first box (the draft angle refers to the inclination arrangement between the bottom wall and the first side wall of the first box). The existence of draft angle can cause interference between the first side wall and the vertically shaped battery cell, making the part of the enclosed space corresponding to the draft angle unusable, resulting in space waste. This leads to a low energy density of the battery.

In view of this, in order to solve the problem of low energy density of batteries caused by low space utilization due to the excessively small draft angle, the inventor conducted in-depth research and designed a battery that eliminates part of the first side wall of the first box in the battery, making the first side wall set on the bottom wall a non-closed structure.

In the above solution, on the one hand, a first side wall is set on the bottom wall to ensure that the structural strength of the first box meets the requirements. On the other hand, the first side wall is set as a non-closed structure, that is, partial edge of the bottom wall is not set with a first side wall, such that the part of the first box corresponding to the part without a first side wall does not have a draft angle, and the corresponding space of this part is increased, so as to overcome the problem of low utilization rate of enclosed space due to draft angle, resulting in the battery having a higher volume energy density.

The battery disclosed in the embodiment of the present disclosure can be used, but is not limited to, for battery cabinets, containerized energy storing devices, etc. The energy storing device may include multiple batteries disclosed in the present disclosure.

The batteries disclosed in the embodiment of the present disclosure may be used, but are not limited to, in electrical equipment such as vehicles, ships, or aircraft. The battery disclosed in the present disclosure can be used to form the power supply system of the electrical equipment.

The embodiment of the present disclosure provides an electrical equipment using a battery as a power source, which can be but is not limited to mobile phones, tablet computers, laptops, electric toys, electric tools, electric bicycles, electric motorcycles, electric vehicles, ships, spacecraft, and so on. In the above, electric toys can include fixed or mobile electric toys, such as game consoles, electric car toys, electric ship toys and electric aircraft toys, and spacecraft can include aircraft, rockets, space shuttles and spaceships, etc.

For the convenience of explanation, the following embodiment takes an electrical device in one embodiment of the present disclosure being the vehicle 1000 as an example to explain.

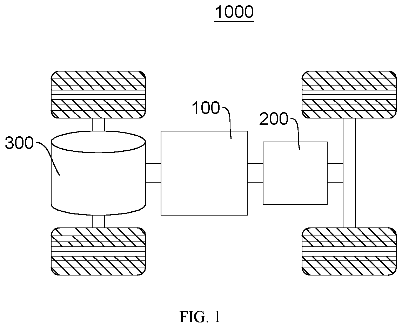

Referring to FIG. 1, FIG. 1 is a structural schematic view of the vehicle provided in some embodiments of the present disclosure. The vehicle 1000 can be a fuel powered vehicle, a gas powered vehicle, or a new energy vehicle. The new energy vehicle can be a pure electric vehicle, a hybrid electric vehicle, or an extended range vehicle, etc. The interior of vehicle 1000 is equipped with battery 100, which can be installed at the bottom, head, or tail of vehicle 1000. Battery 100 can be used for the power supply for the vehicle 1000. For example, battery 100 can serve as the operating power supply for vehicle 1000, and be used for the electrical system of the vehicle 1000, such as for the working power demand during startup, navigation, and operation of the vehicle 1000.

The vehicle 1000 can also include a controller 200 and a motor 300, wherein the controller 200 is used to control the battery 100 to supply power to the motor 300, for example, used for the working power demand during startup, navigation, and running of the vehicle 1000.

In some embodiments of the present disclosure, the battery 100 can not only serve as the operating power source for vehicle 1000, but also as the driving power source for vehicle 1000, thereby replacing or partially replacing fuel or natural gas to provide driving power for vehicle 1000.

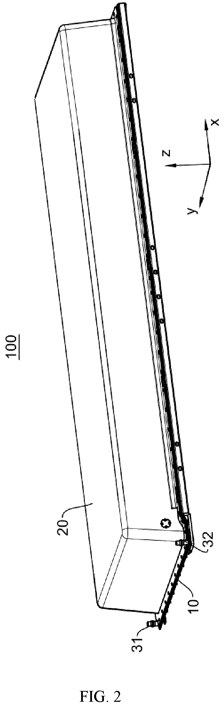

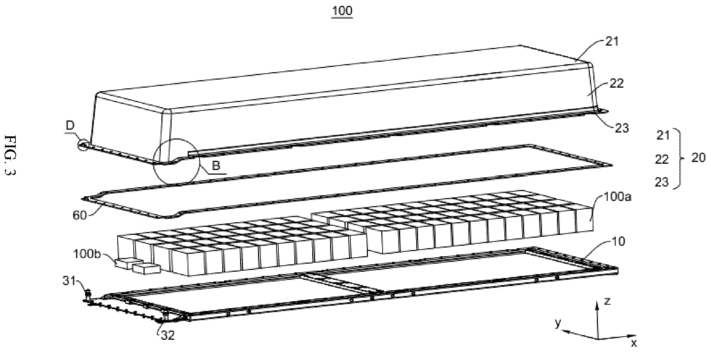

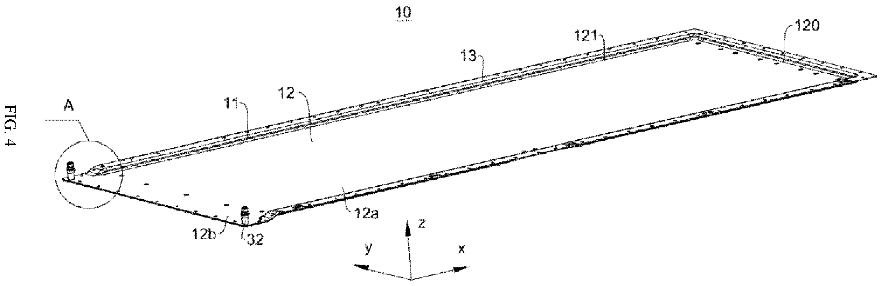

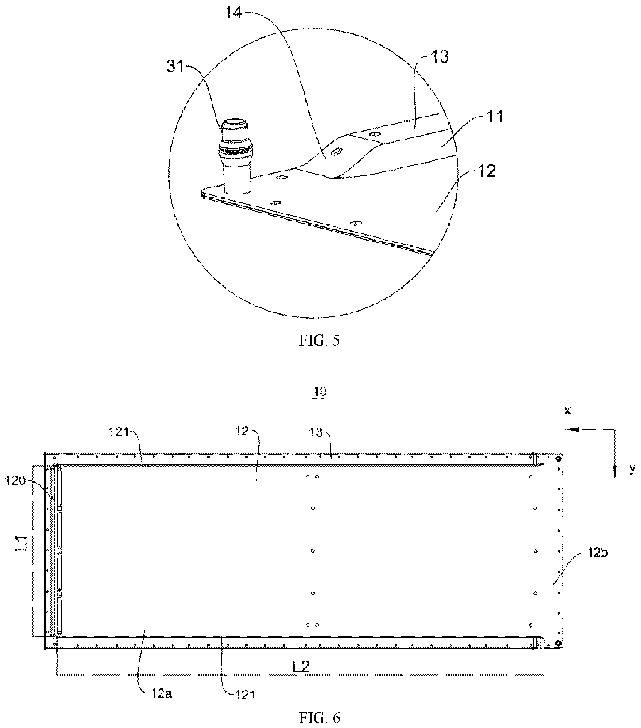

Referring to FIGS. 2-5, FIG. 2 is a three-dimensional view of the battery provided in some embodiments of the present disclosure; FIG. 3 is a three-dimensional exploded view of the battery 100 provided in some embodiments of the present disclosure; FIG. 4 is a three-dimensional view of the first box 10 provided in some embodiments of the present disclosure; and FIG. 5 is an enlarged view of part A of FIG. 4. According to some embodiments of the present disclosure, the present disclosure provides a battery 100, which comprises a battery cell 100a, a first box 10, and a second box 20. The first box 10 and the second box 20 are connected to form an enclosed space together for accommodating battery cells 100a. The first box 10 includes a first side wall 11 and a bottom wall 12. The first side wall 11 is connected to the second box 20, and along the circumference of the bottom wall 12, the first side wall 11 is of a non-closed structure.

The first box 10 and the second box 20 are connected to each other to jointly define an enclosed space for accommodating battery cells 100a. The first box 10 and the second box 20 can be made of materials such as aluminum, aluminum alloy, or stainless steel. The first box 10 and the second box 20 can be made of the same material to reduce the difficulty of connecting the first box 10 and the second box 20. For example, both the first box 10 and the second box 20 are made of aluminum alloy. The first box 10 and the second box 20 can be connected by welding, bonding, or fasteners.

In battery 100, the number of battery cells 100a can be one or multiple. Multiple battery cells 100a can be connected in series, parallel, or hybrid. Hybrid connection refers to both series and parallel connections existing among multiple battery cells 100a. Multiple battery cells 100a can be directly connected in series, parallel, or hybrid together, and then the entire body composed of multiple battery cells 100a is accommodated in the enclosed space. The battery 100 may also include other structures, for example, the battery 100 may also include a busbar component for achieving electrical connection between multiple battery cells 100a. The battery cell 100a can be a secondary battery or a primary battery; and can also be a lithium sulfur battery, sodium ion battery, or magnesium ion battery, but is not limited thereto.

The bottom wall 12 is the main body of the first box 10, and is arranged opposite to the second box 20. The thickness direction z of the bottom wall 12 can be the height direction of the battery 100. The first side wall 11 is a component set at the edge of the bottom wall 12 and protrudes from the bottom wall 12. The end of the first side wall 11 away from the bottom wall 12 can be connected to the second box 20.

The first side wall 11 is of a non-closed structure, which can refer to that a portion of the edge of the bottom wall 12 is not equipped with a first side wall 11, resulting in the head end and the tail end of the first side wall 11 not being closed, or in other words, the first side wall 11 is only located at a portion of the edge of the bottom wall 12.

In the above solution, compared to the closed structure of the first side wall 11, by setting the first side wall 11 as a non-closed structure, a portion of the side wall of the second box 20 (corresponding to the part of the first box 10 without the first side wall 11) is directly connected to the bottom wall 12, thereby increasing the space above the part of the first box 10 without the side wall, reducing the interference of this part of side wall of the first box 10 with the battery cells in the enclosed space, and overcoming the interference of the draft angle on the battery cells 100a, so as to improve the utilization rate of the enclosed space, accommodate more battery cells 100a, and increase the volume energy density of the battery 100.

According to some embodiments of the present disclosure, the second box 20 is connected to an edge of the bottom wall 12 that is not provided with the first side wall 11.

In some embodiments, the connection part between the first box 10 and the second box 20 includes the first side wall 11, and the edge of the bottom wall 12 that is not equipped with the first side wall 11. When the second box 20 is connected to the edge of the first bottom wall 12 without a first side wall 11, the area of the bottom wall 12 can be effectively utilized to ensure a larger volume of the enclosed space.

In the above solution, the second box 20 is connected to the edge of the bottom wall 12 that is not provided with the first side wall 11, which can maximize the volume of the enclosed space and make the battery 100 have a higher volume energy density.

In some other embodiments, the second box 20 can be connected to a non-edge position of the bottom wall 12 and the first side wall 11, which can also form an enclosed space with the first box 10.

According to some embodiments of the present disclosure, the bottom wall 12 comprises a first region 12a and a second region 12b, wherein the first region 12a and the second region 12b are arranged side by side along the first direction x, the first side wall 11 is arranged at the edge of the first region 12a, and the edge of the second region 12b is not provided with a first side wall 11. The first direction x is perpendicular to the thickness direction z of the bottom wall 12.

Referring to FIG. 4, the first box 10 is a square box, and the first direction x can be the length direction of the first box 10. The first region 12a and the second region 12b are two regions arranged side by side along the length direction of the first box 10. The first region 12a and the second region 12b can both be square, and the edges of the first region 12a and the second region 12b together form the edge of the bottom wall 12. The edge of the first region 12a is equipped with a first side wall 11, while the edge of the second region 12b is not equipped with a first side wall 11.

In the above solution, the edge of the second region 12b set side by side with the first region 12a along the first direction x is not equipped with a first side wall 11. The part of the second box 20 corresponding to the first region 12a is directly connected to the bottom wall 12, which will increase the space above the part without the side wall in the second region 12b, so as to improve the utilization rate of the enclosed space, and thus maximize the volume energy density of the battery 100.

In other embodiments, the first box 10 may be circular or irregularly shaped.

In other embodiments, the second region 12b may not be set. When the first region 12a is square, one edge of the first region 12a is not set with a first side wall 11, and all other edges are set with a first side wall 11.

According to some embodiments of the present disclosure, referring to FIGS. 3 and 4, the battery 100 further comprises an electronic component 100b, which is accommodated in an enclosed space and at least partially located in the second region 12b, and the battery cell 100a is located in the first region 12a.

Electronic component 100b can refer to a component that can monitor the status of battery 100 or adjust the status of battery cells 100a. In some embodiments, electronic components 100b may include but are not limited to BMS (Battery Management System), high-voltage boxes, or inverters, etc.

In some embodiments, the size of electronic component 100b is smaller than that of battery cell 100a. Therefore, part or all of electronic components 100b can be placed in the part of the enclosed space corresponding to the second region 12b to make reasonable use of the enclosed space.

In the above solution, by removing the side wall of the edge of the second region 12b, the space above the second region is increased. Therefore, setting a smaller electronic component 100b in the second region 12b can reduce the occupation of electronic component 100b on the first region. In this way, more battery cells 100a can be placed in the first region 12a, improving the volumetric energy density of battery 100.

According to some embodiments of the present disclosure, referring to FIG. 6, FIG. 6 is a top view of the first box 10 provided in some embodiments of the present disclosure. The first region 12a includes a first edge 120 and two second edges 121, with two second edges 121 arranged opposite to each other along the second direction y. The first edge 120 connects the two second edges 121, and the first side wall 11 is set at the first edge 120 and the two second edges 121. The second direction y is perpendicular to the thickness direction z of the bottom wall 12.

The second direction y is perpendicular to the thickness direction z of the bottom wall 12. In some embodiments, the second direction y may be the width direction of the first box 10. Along the second direction y, two second edges 121 are set opposite to each other, and the first edge 120 is located between the two second edges 121 and connects the two second edges 121, so as to forming a U-shape. In some embodiments, the end of the second edge 121 away from the first edge 120 is connected to the edge of the second region 12b. The first side wall 11 is set at the first edge 120 and two second edges 121, which can refer to that the first side wall 11 is set at the three edges of the first region 12a (the first edge 120 and two second edges 121), so as to form a U-shaped non-closed structure.

In the above solution, by setting the first side wall 11 at the first edge 120 and two second edges 121, the structural strength of the first box 10 can be ensured, and the structural strength of the battery 100 can be ensured, making the battery cell 100a have higher safety.

According to some embodiments of the present disclosure, as shown in FIG. 4, both second edges 121 extend along the first direction x, with the first direction x, the second direction y, and the thickness direction z of the bottom wall 12 perpendicular to each other.

In some embodiments, the first direction x can be the length direction of the first box 10, the second direction y can be the width direction of the first box 10, and the first direction x, the second direction y, and the thickness direction z of the bottom wall 12 are perpendicular to each other to limit the rectangular shape of the first box 10, that is to say, the first edge 120 corresponds to the short side of the first box 10, and the second edge 121 corresponds to the long side of the first box 10, or in other words, the second edge 121 is a part of the long side.

In some embodiments, along the first direction x, the size of the first region 12a may be larger than the size of the second region 12b. By setting the first side wall 11 at the first edge 120 and the second edges 121, most of the edges of the bottom wall 12 are set with the first side wall 11, effectively improving the structural strength of the first box body 10.

In the above solution, due to the first direction x, the second direction y, and the thickness direction z of the bottom wall 12 being perpendicular to each other, the first box 10 is a square box (for example, the first box 10 is a rectangular box or a square box). Compared with non-square boxes, the square box can be efficiently manufactured, improving the manufacturing efficiency of battery 100.

In other embodiments, the first direction x may not be perpendicular to the second direction y, and the first box 10 may be in a trapezoidal or other shape.

According to some embodiments of the present disclosure, the length of the second edge 121 is greater than the length of the first edge 120.

Referring to FIG. 6, L1 indicates the length of the first edge 120 and L2 indicates the length of the second edge 121, satisfying L2>L1.

The length of the second edge 121 can refer to the size of the second edge 121 in the first direction x, or can refer to the size of the second edge 121 in its extension direction. The length of the first edge 120 can refer to the size of the first edge 120 in the second direction y, or can refer to the size of the first edge 120 in its extension direction.

In the above solution, along the first direction x, the edge opposite to the first edge 120 of the bottom wall 12 is an edge without a first side wall 11, so the edge with a smaller length of the bottom wall 12 is not equipped with a first side wall 11, which can improve the structural strength of the first box 10.

In some other embodiments, the length of the second edge 121 may also be less than or equal to the length of the first edge 120.

According to some embodiments of the present disclosure, referring to FIG. 5, the first box 10 further comprises a first flange 13, which extends outward from one end of the first side wall 11 away from the bottom wall 12. The first side wall 11 is connected to the second box 20 through the first flange 13.

"Outward extension" can refer to the extension of the first flange 13 towards the outer side of the first box 10.

The first flange 13 can refer to the part that extends outward from one end of the first side wall 11 away from the bottom wall 12, and is horizontal or almost horizontal, in order to provide a larger contact surface for the second box 20.

In the above solution, by setting a first flange 13, it is convenient and effective to connect the first side wall 11 and the second box 20, ensuring a stable and sealed connection between the first side wall 11 and the second box 20, and ensuring the safety of the battery cells 100a in the enclosed space.

According to some embodiments of the present disclosure, referring to FIGS. 4 and 5, along the second direction y, the second region 12b extends beyond two second edges 121; and the first box 10 also includes a transition section 14, and the end of the first flange 13 and the portion of the second region 12b that exceeds the second edge 121 are connected through the transition section 14.

In the second direction y, the second region 12b will protrude from the two second edges 121 of the first region 12a, and the portion of the second region 12b protruding from the first region 12a is connected to the first flange 13 through a transition section 14. The end of the first flange 13 is connected to a portion of the second region 12b that protrudes from the first region 12a through a transition section 14.

In some embodiments, the first flange 13 can be formed on the first side wall 11 by rolling, and the transition section 14 can also be formed by rolling.

In the above solution, along the second direction y, the connection between the first flange 13 and the second region 12b is achieved by setting the second region 12b beyond the second edges 121 and setting a transition section 14, ensuring that the first box 10 has a flat outer contour and facilitating connection with the second box 20.

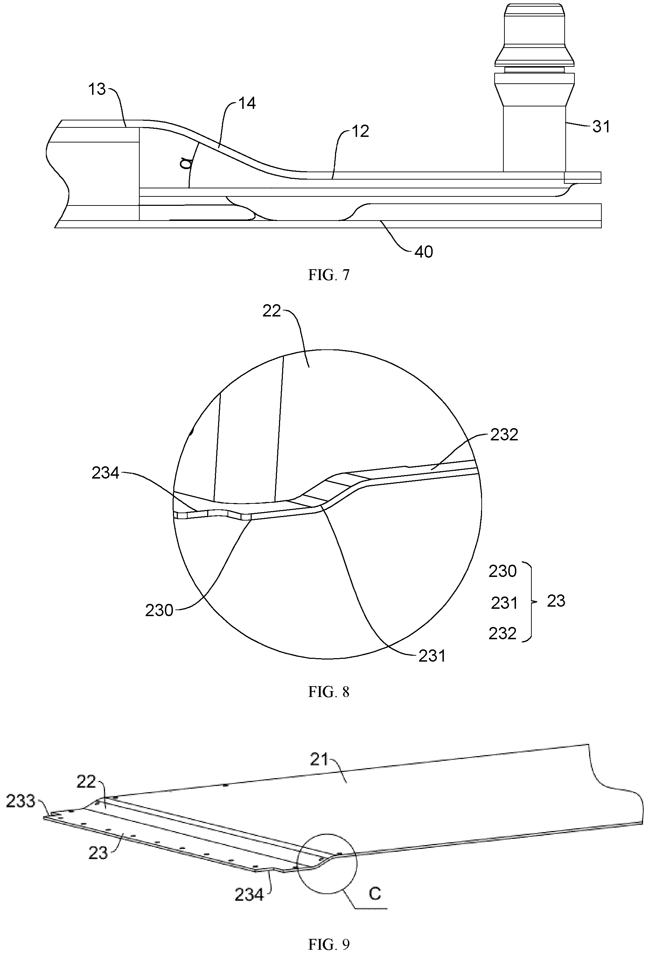

According to some embodiments of the present disclosure, combining FIGS. 5 and 7, FIG. 7 is a partially schematic view of the first box 10 provided in some embodiments of the present disclosure. The transition section 14 is inclined relatively to the bottom wall 12.

The transition section 14 is inclined relatively to the bottom wall 12, which can mean that the transition section 14 is neither parallel nor perpendicular to the bottom wall 12.

In the above solution, by tilting the transition section 14, the sealing between the first flange 13 and the second box 20 can be improved, ensuring the safety of the battery 100.

In some embodiments, when a sealing member 60 is provided between the first box 10 and the second box 20, the sealing member 60 has a portion corresponding to the transition section 14, which is located between the transition section 14 and the second box 20, ensuring the sealing between the first box 10 and the second box 20.

According to some embodiments of the present disclosure, as shown in FIG. 7, the inclination angle of the transition section 14 relative to the bottom wall 12 is α, meeting 0° < α≤ 60°.

In some embodiments, the values of α can be 1°, 2°, 3°, 4°, 5°, ..., 54°, 55°, 56°, 57°, 58°, 59°, or 60°.

In the above solution, the inclination angle of the transition section 14 from the bottom wall 12 is set to be no more than 60° to reduce the risk of sealing failure of the second box 20 and the first flange 13, ensuring the sealing between the first box 10 and the second box 20.

In some embodiments, the inclination angle of the transition section 14 relative to the bottom wall 12 is α, meeting 20°≤ α≤ 40°. For example, the values of α can be 20°, 21°, 22°, 23°, 24°, ..., 34°, 35°, 36°, 37°, 38°, 39°, or 40°.

In some embodiments, the inclination angle α of the transition section 14 relative to the bottom wall 12 is 25°.

In some embodiments, to ensure a smooth transition of the first flange 13 to the second region 12b and to ensure the sealing between the first box 10 and the second box 20, the inclination angle α of the transition section 14 relative to the bottom wall 12 can be 60°.

In other embodiments, the value of α can be or exceed 60°, such as 61°, 62°, or 63°.

According to some embodiments of the present disclosure, referring to FIG. 3 and combining FIG. 8, FIG. 8 is an enlarged view at part B in FIG. 3. The second box 20 comprises a top wall 21, a second side wall 22, and a second flange 23, wherein the second side wall 22 is provided at the edge of the top wall 21, and the second flange 23 extends outward from one end of the second side wall 22 away from the top wall 21; and the second flange 23 comprises a first part 230, a second part 231, and a third part 232, wherein the first part 230 is connected to the edge of the bottom wall 12 without the first side wall 11, the second part 231 is correspondingly set with the transition section 14, and the third part 232 is connected to the first flange 13.

The top wall 21 can be the main body of the second box 20, which can be set relatively to the bottom wall 12. The direction from the top wall 21 to the bottom wall 12 can be the height direction of the battery 100.

The second side wall 22 can surround the edge of the top wall 21 and form a closed structure, that is, the second side wall 22 is around the edge of the top wall 21 in one circle. Due to the second side wall 22 surrounding the edge of the top wall 21 in one circle, a chamber is formed inside the second box 20. When the second box 20 is connected to the first box 10, the chamber is part of the enclosed space.

When the part of the second side wall 22 is connected to the edge of the bottom wall 12 without a first side wall 11 through the second flange 23, the corresponding second side wall 22 at this position has a larger draft angle relative to the top wall 21 (which is larger than the draft angle of the part of the second side wall 22 corresponding to the first side wall 11), and this position corresponds to the first region of the bottom wall 12. Therefore, there is a larger space above the first region 12a, which can accommodate components with lower heights such as electronic components, so as to make reasonable use of the enclosed space and improve space utilization rate.

The second flange 23 can refer to the part that extends outward from one end of the second side wall 22 away from the top wall 21, and is horizontal or almost horizontal, in order to provide a larger contact surface for the first box 10.

Referring to FIG. 8, the second flange 23 includes the first part 230, the second part 231, and the third part 232. The first part 230 is closer to the first box 10 than the third part 232, that is, the first part 230 protrudes towards the first box 10 compared to the third part 232, to connect with the edge of the bottom wall 12 without the first side wall 11. The third part 232 is connected to the first flange 13. The second part 231 is located between the first part 230 and the third part 232 and connects the first part 230 and the third part 232. The second part 231 corresponds to the transition section 14 to be directly or indirectly connected to the transition section 14. "Directly or indirectly connected to the transition section 14" can refer to that the second part 231 can be directly bonded, or welded to the transition section 14, or connected to the transition section 14 through fasteners, or can refer to that the second part 231 is connected to the transition section 14 through intermediate components (such as gaskets or other components).

In the above solution, the second box 20 is connected to the edge of the bottom wall 12 without the first side wall 11, the transition section 14, and the first flange 13 through the second flange 23, so as to ensure the sealing between the first box 10 and the second box 20. Meanwhile, the second side wall 22 surrounds the edge of the top wall 21 to form one chamber, thereby increasing the volume of the enclosed space and accommodating more battery cells 100a, resulting in a higher volumetric energy density of the battery 100.

In some embodiments, a through hole is provided on the first flange 13, a through hole is provided on the second flange 23, a through hole is provided on the transition section 14, and a through hole is also provided at the position where the bottom wall 12 is connected to the second flange 23. When connecting the first box 10 and the second box 20, the first box 10 and the second box 20 can be tightened by penetrating fasteners (such as bolts) through the through holes.

In some embodiments, the section of the transition section 14 may be curved to achieve a smooth transition between the first flange 13 and the bottom wall 12, ensuring the quality of the molding.

In some embodiments, referring to FIG. 3, when the first box 10 is equipped with a first flange 13 and the second box 20 is equipped with a second flange 23, a sealing member 60 can be provided between the first box 10 and the second box 20. The sealing member 60 is annular and is arranged around the edge of the enclosed space to ensure the sealing between the first flange 13 and the second box 20, and to ensure the sealing between the second flange 23 and the first box 10. The sealing member 60 can be a rubber ring.

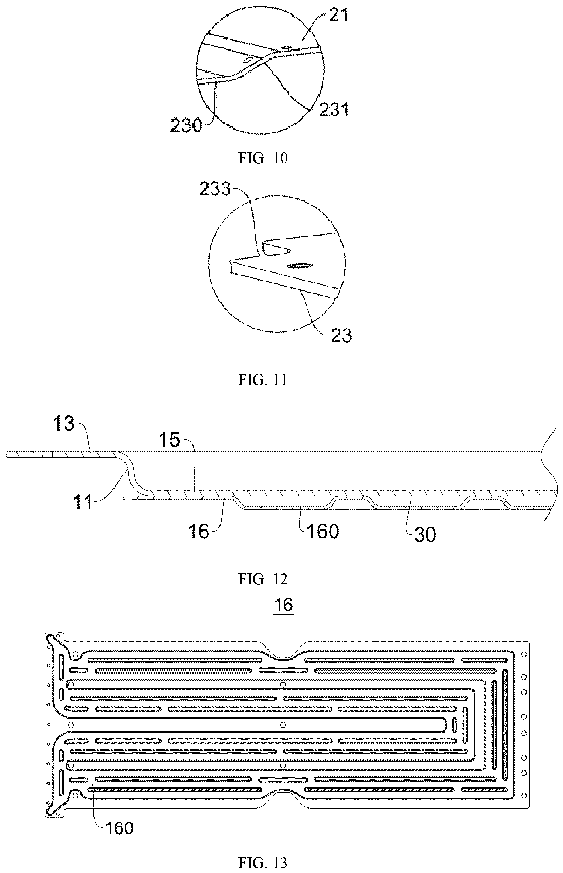

According to some other embodiments of the present disclosure, referring to FIGS. 9 and 10, FIG. 9 is a schematic view of the second box 20 provided in some other embodiments of the present disclosure; and FIG. 10 is an enlarged view of part C of FIG. 9. The second box 20 comprises a top wall 21, a second side wall 22, and a second flange 23, wherein the second side wall 22 is provided at the partial edge of the top wall 21, and the second flange 23 extends outward from one end of the second side wall 22 away from the top wall 21; and the second flange 23 comprises a first part 230, and a second part 231, wherein the first part 230 is connected to the edge of the bottom wall 12 without the first side wall 11, the second part 231 is correspondingly set with the transition section 14, and the edge of the top wall 21, which is not set with the second side wall 22, is connected to the first flange 13.

The top wall 21 can be the main body of the second box 20, which can be set opposite to the bottom wall 12. The direction from the top wall 21 to the bottom wall 12 can be the height direction of the battery 100.

The second side wall 22 can surround the partial edge of the top wall 21, and it is of a non-closed structure. The second side wall 22 corresponds to a part of the bottom wall 12 where there is no first side wall 11. The second flange 23 can refer to the part that extends outward from one end of the second side wall 22 away from the top wall 21, and is horizontal or almost horizontal, in order to provide a larger contact surface for the first box 10.

The second flange 23 includes the first part 230 and the second part 231. The first part 230 is connected to the edge of the bottom wall 12 without a first side wall 11, and the second part 231 is connected relatively to the transition section 14. The first flange 13 on the bottom wall 12 is directly connected to the plate-shaped top wall 21.

In the above solution, the main body of the second box 20 is in the shape of a plate, and a second side wall 22 is set at the partial edge of the main body to correspond to the part where the first box 10 does not have a first side wall 11. Therefore, the second box 20 has the advantages of simple structure and low material cost. At the same time, the second box 20 is connected to the edge of the bottom wall 12 without a first side wall 11 and transition section 14 through a second flange 23, and is connected to the first flange 13 through the edge of the plate-like top wall 21 to ensure the sealing between the first box 10 and the second box 20, thereby ensuring the safety of the battery 100.

According to some embodiments of the present disclosure, referring to FIG. 8, the second part 231 is tilted relatively to the first part 230.

The second part 231 is inclined relatively to the first part 230, that is, the second part 231 is inclined relatively to the bottom wall 12 to correspond to the inclined transition section 14.

In the above solution, the second part 231 is set correspondingly to the transition section 14. When the transition section 14 is tilted, the stability and sealing of the connection between the second part 231 and the transition section 14 can be improved by tilting the second part 231, ensuring the safety of the battery 100.

According to some embodiments of the present disclosure, the second part 231 and the transition section 14 are parallel to each other.

The second part 231 and the transition section 14 are parallel to each other, which can refer to that the inclination angles of the second part 231 and the transition section 14 corresponding to the bottom wall 12 are the same, or can refer to that when the first box 10 and the second box 20 are connected, the second part 231 is adhered to the transition section 14.

In the above solution, the second part 231 is parallel to the transition section 14 to ensure that the second part 231 can be effectively and hermetically connected to the transition section 14, ensuring the stability and sealing of the connection between the first box 10 and second box 20, and thus ensuring the safety of the battery 100.

In other embodiments, the inclination angles of the second part 231 and the transition section 14 may be different from each other. When the first box 10 and the second box 20 are connected, the second part 231 can be connected to the transition section 14 through intermediate components such as gaskets.

According to some embodiments of the present disclosure, the bottom wall 12, the first side wall 11, and the first flange 13 are integrally formed.

Integral forming can refer to that a bottom wall 12, a first side wall 11, and a first flange 13 are formed on the first box 10 through an integrated molding process by using one structural component.

In the above solution, by integrally forming the first side wall 11 and first flange 13 on the bottom wall 12, the structural strength of the first box 10 can be improved, ensuring that the battery cell 100a is safely placed in the enclosed space.

In some other embodiments, the bottom wall 12, the first side wall 11, and the first flange 13 may be connected to each other by welding or bonding.

According to some embodiments of the present disclosure, the first box 10 is formed by stamping, die-casting, or bending.

The first side wall 11 and the first flange 13 can be formed on the bottom wall 12 through stamping, die-casting, or bending processes.

In the above solution, manufacturing the first box 10 through stamping, die-casting, or bending can make the first box 10 have higher manufacturing efficiency, so as to make the battery 100 have higher manufacturing efficiency.

According to some embodiments of the present disclosure, combining FIGS. 3 and 5, the battery 100 comprises a flow channel 30 for accommodating a heat exchange medium (referring to FIG. 12) to regulate the temperature of the battery cell 100a. The battery 100 also includes an inlet pipe 31 and an outlet pipe 32, both of which are communicated with the flow channel 30. The inlet pipe 31 and the outlet pipe 32 are both located on the outside of the enclosed space (as shown in FIG. 2).

The flow channel 30 refers to the part that can accommodate the heat exchange medium and achieve the flow of heat exchange medium.

The heat exchange medium can be fluid (liquid) or gas. Temperature regulation refers to the exchange of heat with the battery cell 100a, so as to achieve absorption of heat from the battery cell 100a, cooling of the battery cell 100a, or providing heat to the battery cell 100a to achieve heating of the battery cell 100a. Optionally, the fluid can be water, a mixed liquid of water and ethylene glycol, or air, etc.

The inlet pipe 31 and outlet pipe 32 are components that communicate with the flow channel 30. The inlet pipe 31 and outlet pipe 32 can be connected to external pipes respectively, thereby allowing the heat exchange medium to enter the flow channel 30 through the inlet pipe 31 and be discharged from the flow channel 30 through the outlet pipe 32. In some embodiments, after the battery 100 is installed on the electrical equipment, the external pipes can be connected to the inlet pipe 31 and outlet pipe 32 by inserting.

In the above solution, the temperature of the battery cells 100a is adjusted by setting flow channels 30 to reduce the risk of thermal runaway of the battery 100 and improve the safety of the battery 100. At the same time, by arranging the inlet pipe 31 and outlet pipe 32 at the outside of the enclosed space, it is convenient to connect the external pipes with the inlet pipe 31 and outlet pipe 32 to achieve the circulation of the heat exchange medium.

According to some embodiments of the present disclosure, the inlet pipe 31 and the outlet pipe 32 are both located on one side of the bottom wall 12 facing the second box 20.

The inlet pipe 31 and the outlet pipe 32 are both located on one side of the bottom wall 12 facing the second box 20, which can refer to that along the height direction of the battery 100, and the inlet pipe 31 and outlet pipe 32 are set towards the direction of the second box 20.

In the above solution, the inlet pipe 31 and the outlet pipe 32 are both arranged facing one side of the bottom wall 12 facing the second box 20, in order to make reasonable use of the height space of the battery 100 and achieve the insertion and removal between the external pipes and the inlet pipe 31 and outlet pipe 32. Compared with the solution of horizontally setting the inlet pipe 31 and outlet pipe 32, it can reduce the additional horizontal size of the battery 100 caused by the insertion and removal of external pipes, thereby reducing the volume of the entire battery 100 and achieving the goal of improving the energy density of the battery 100.

In some other embodiments, the inlet pipe 31 and outlet pipe 32 may also be located on one side of the bottom wall 12 facing away from the second box 20.

According to some embodiments of the present disclosure, the inlet pipe 31 and outlet pipe 32 do not exceed the second box 20 along the direction of the bottom wall 12 pointing towards the second box 20.

The direction of the bottom wall 12 pointing towards the second box 20 can be the height direction of the battery 100. In the height direction of battery 100, the inlet pipe 31 and outlet pipe 32 do not exceed the second box 20.

In the above solution, the inlet pipe 31 and outlet pipe 32 are set to not exceed the second box 20 to ensure that the insertion positions of the inlet pipe 31 and outlet pipe 32 and the external pipes are within the height range of the battery 100.

According to some embodiments of the present disclosure, referring to FIG. 5, the inlet pipe 31 and the outlet pipe 32 are both inclined or vertically arranged relative to the bottom wall 12.

The inlet pipe 31 and outlet pipe 32 are both inclined or vertically arranged relative to the bottom wall 12, which can refer to that the axis of the inlet pipe 31 and outlet pipe 32 is inclined or vertically arranged relative to the bottom wall 12. When pulling or inserting the external pipes, at least part of the pulling force is along the height direction of the battery 100.

In the above solution, the direction of insertion or removal between the inlet pipe 31 and outlet pipe 32 and the external pipes is inclined or perpendicular to the bottom wall 12, in order to make reasonable use of the height space of the battery 100 to achieve insertion or removal without occupying additional space, thereby ensuring the higher volume energy density of the battery 100.

According to some embodiments of the present disclosure, referring to FIG. 11, FIG. 11 is an enlarged view at part D in FIG. 3. The second box 20 comprises a top wall 21, a second side wall 22, and a second flange 23, wherein the second side wall 22 is provided at the edge of the top wall 21, and the second flange 23 extends outward from one end of the second side wall 22 away from the top wall 21. The second flange 23 is equipped with a first avoidance part 233 and a second avoidance part 234 (referring to FIG. 8), and the inlet pipe 31 and outlet pipe 32 pass through the first avoidance part 233 and the second avoidance part 234, respectively.

The first avoidance part 233 is a part located on the second flange 23 to avoid the inlet pipe 31. When the first box 10 and the second box 20 are connected to each other, the inlet pipe 31 can be passed through the first avoidance part 233, so as to not affect the sealing between the second flange 23 and the first box 10. The second avoidance part 234 is a part located on the second flange 23 to avoid the outlet pipe 32. When the first box 10 and the second box 20 are connected to each other, the outlet pipe 32 can be passed through the second avoidance part 234, so as to not affect the sealing between the second flange 23 and the first box 10.

In some embodiments, a sealing member 60 is provided between the first flange 13 and the second flange 23. Since the second flange 23 is provided with a first avoidance part 233 and a second avoidance part 234, the sealing member 60 can correspondingly be provided with an avoidance structure.

In the above solution, setting a second flange 23 can improve the sealing of the first box 10 and second box 20, ensuring the sealing of the battery 100. In order to avoid the situation where the second flange 23 is adjusted towards the direction of the enclosed space to avoid the inlet pipe 31 and outlet pipe 32, resulting in a decrease in the volume of the enclosed space, the first avoidance part 233 and second avoidance part 234 are set to respectively avoid the inlet pipe 31 and outlet pipe 32, thereby ensuring that the volume of the enclosed space is not affected and making the battery 100 have a higher energy density.

According to some embodiments of the present disclosure, the first avoidance part 233 and the second avoidance part 234 are notches set at the edge of the second flange 23.

Referring to FIG. 11, FIG. 11 illustrates the first avoidance part 233. The first avoidance part 233 is concave inward from the edge of the second flange 23 to form a notch that allows the inlet pipe 31 to pass through.

In the above solution, the first avoidance part 233 and second avoidance part 234 are notches formed at the edge of the second flange 23, and their forming is simple and convenient.

In some other embodiments, the first avoidance part 233 and the second avoidance part 234 can be through holes set at the edge of the second flange 23.

According to some embodiments of the present disclosure, combining FIGS. 5 and 12, FIG. 12 is a partially sectional view of the first box 10 provided in some embodiments of the present disclosure. The flow channel 30 is formed inside the bottom wall 12, and the inlet pipe 31 and the outlet pipe 32 are both set at the edge of the bottom wall 12 without the first side wall 11.

A flow channel 30 is formed inside the bottom wall 12, which can refer to that the flow channel 30 is integrated to the bottom wall 12. The bottom wall 12 can not only serve as a component supporting the battery cell 100a, but also serve as a component for accommodating heat exchange media to regulate the temperature of the battery cell 100a.

Both inlet pipe 31 and outlet pipe 32 are equipped with a bottom wall 12 to communicate with the flow channel 30 inside the bottom wall 12.

Referring to FIG. 5, inlet pipe 31 and outlet pipe 32 can be arranged in the second region 12b. In some embodiments, the inlet pipe 31 and outlet pipe 32 may be provided at the edge of the second region 12b.

In the above solution, the flow channel 30 is set inside the bottom wall 12. By setting the inlet pipe 31 and outlet pipe 32 at the edge of the bottom wall 12 without a first side wall 11, it is reasonable to avoid the first side wall 11, so as to avoid interference between the inlet pipe 31 and outlet pipe 32 and the first side wall 11, reduce the assembly difficulty of battery 100, and improve the manufacturing efficiency of the battery 100.

According to some embodiments of the present disclosure, the connection between the inlet pipe 31 and the bottom wall 12, and the connection between the outlet pipe 32 and the bottom wall 12 are both located on the outer side of the enclosed space.

Referring to FIGS. 4 and 5 together, the inlet pipe 31 and outlet pipe 32 are both straight pipes.

The connection between the inlet pipe 31 and the bottom wall 12, and the connection between the outlet pipe 32 and the bottom wall 12 are both located on the outer side of the enclosed space, indicating that inlet pipe 31 and outlet pipe 32 are not within the enclosed space.

In the above solution, the connection between the inlet pipe 31 and the bottom wall 12, and the connection between the outlet pipe 32 and the bottom wall 12 are set on the outside of the enclosed space, which can avoid forming holes on the first box 10 or second box 20 to lead the inlet pipe 31 and outlet pipe 32 out to the outside of the enclosed space. Therefore, it can reduce the sealing treatment on the opening, ensure the sealing of the battery 100, and reduce the assembly difficulty of the battery 100.

In some other embodiments, the inlet pipe 31 and outlet pipe 32 may be bent pipes, and the connection between the inlet pipe 31 and the bottom wall 12, and the connection between the outlet pipe 32 and the bottom wall 12 are both located in an enclosed space. The open ends of the inlet pipe 31 and the outlet pipe 32 may pass through the first box 10 or the second box 20 to be exposed outside the enclosed space, so as to achieve insertion and removal with external pipes.

According to some embodiments of the present disclosure, as shown in FIG. 4, the inlet pipe 31 and the outlet pipe 32 are respectively provided at the two corners of the bottom wall 12.

The corner of bottom wall 12 can refer to the corner position of the adjacent two sides of bottom wall 12.

In the above solution, setting the inlet pipe 31 and outlet pipe 32 at the corners of the bottom wall 12 can avoid the invasion of the enclosed space by the inlet and outlet pipes, ensuring that the battery has a higher energy density.

In some embodiments, as shown in FIG. 4, the inlet pipe 31 and outlet pipe 32 are provided at two corners of the bottom wall 12, and the first avoidance part 233 and second avoidance part 234 corresponding to the inlet pipe 31 and outlet pipe 32 are respectively provided at the corners of the second flange 23. Meanwhile, correspondingly, there are also avoidance structures for inlet pipe 31 and outlet pipe 32 at the corners of sealing member 60.

The size at the corner of the second flange 23 is larger than that at the non-corner position. When a notch or through hole is set at the corner to form the first avoidance part 233 and the second avoidance part 234, the impact of setting a notch or through hole on the sealing can be reduced. Similarly, the size at the corner of the sealing member 60 is larger than that at the non-corner position. When a notch or through hole is set at the corner to form the avoidance structure, the impact of setting a notch or through hole on the sealing can be reduced.

In the above solution, the inlet pipe 31 and outlet pipe 32 are respectively set at the two corners of the bottom wall 12, so that the first avoidance part 233 and the second avoidance part 234 are formed at the corner positions of the second flange 23. Due to the larger area of the corner part of the second flange 23 compared to other parts, it is possible to reduce the impact of forming the first avoidance part 233 and the second avoidance part 234 on the second flange 23, ensuring the stability and sealing of the connection between the second flange 23 and the first box 10.

According to some embodiments of the present disclosure, referring to FIGS. 12 and 13, FIG. 13 is a schematic view of the second substrate 16 provided in some embodiments of the present disclosure. The bottom wall 12 includes a first substrate 15 and a second substrate 16 stacked to each other. The second substrate 16 is located on one side of the first substrate 15 facing away from the second box 20, and the flow channel 30 is formed between the second substrate 16 and the first substrate 15.

Along the thickness direction z of the bottom wall 12, the first substrate 15 and the second substrate 16 are stacked, and form a flow channel 30 to accommodate the heat exchange medium between the two. The first substrate 15 is closer to the second box 20 than the second substrate 16, and the inlet pipe 31 and outlet pipe 32 can be provided on the surface of the first substrate 15 that is away from the second substrate 16, and communicated to the flow channel 30.

The first substrate 15 and the second substrate 16 can be connected to each other by bonding or welding.

In the above solution, the first substrate 15 and the second substrate 16 are stacked to form a flow channel 30, making the bottom wall 12 simple in structure and easy to manufacture.

According to some embodiments of the present disclosure, referring to FIG. 12, the first side wall 11 is connected to the first substrate 15.

In some embodiments, the first side wall 11 can be integrally formed on the first substrate 15.

In some embodiments, the first substrate 15 is in the shape of a plate, and the first side wall 11 is formed on the first substrate 15 by rolling, stamping, or bending, so that the first substrate 15 has stronger structural strength and can be conveniently connected to the second box 20. In some embodiments, the first side wall 11 may be connected to the first substrate 15 by bonding or welding.

In the above solution, the first substrate 15 is closer to the second box 20 than the second substrate 16, so setting the first side wall 11 on the first substrate 15 can easily connect the first box 10 and the second box 20, thereby reducing the assembly difficulty of battery 100.

In some other embodiments, the first side wall 11 may be connected to the second substrate 16.

According to some embodiments of the present disclosure, a groove 160 is formed on the surface of the second substrate 16 facing the first substrate 15, and the surface of the first substrate 15 facing the second substrate 16 forms a flow channel 30 together with the groove 160.

The surface of the second substrate 16 facing the first substrate 15 can be the inner wall surface of the bottom wall 12. A groove 160 is set on the inner wall surface to form a flow channel 30 for the flow of heat exchange medium, thereby achieving temperature regulation for the battery cell 100a. In some embodiments, the surface of the first substrate 15 facing the second substrate 16 may be a flat surface. In some other embodiments, a groove 160 may also be provided on the surface of the first substrate 15 facing the second substrate 16 to be opposite to the groove 160 on the second substrate 16. To ensure that the first substrate 15 can stably support the battery cell 100a, the surface of the first substrate 15 away from the second substrate 16 can be a flat surface.

Referring to FIG. 13, the groove 160 on the second substrate 16 can be meandering and arranged on the second substrate 16 according to design requirements to achieve sufficient heat exchange between the heat exchange medium and the battery cell 100a.

In the above solution, a groove 160 is formed on the surface of the second substrate 16 to form a flow channel 30 together with the first substrate 15, so that the heat exchange medium can effectively regulate the temperature of the battery cell 100a and improve the safety of the battery 100.

According to some other embodiments of the present disclosure, the battery 100 further comprises a thermal management component, wherein a flow channel 30 is provided within the thermal management component, the thermal management component is provided within an enclosed space, and both the inlet pipe 31 and outlet pipe 32 are provided within the thermal management component.

The flow channel 30 is formed inside the thermal management component, and accommodates the heat exchange medium to regulate the temperature of the battery cell 100a, keeping the battery 100 within a suitable temperature range, and ensuring high safety of the battery 100. For example, in the case of cooling or lowering the temperature of battery cells 100a, the thermal management component is used to accommodate a cooling fluid to lower the temperature of multiple battery cells 100a. In this case, the thermal management component can also be referred to as a cooling component, cooling system, or cooling plate, and the fluid it contains can also be referred to as a cooling medium or cooling fluid, and more specifically, can be referred to as a coolant or cooling gas. When the fluid contained in the thermal management component is cooling water, the thermal management component can also be called a water-cooled plate. The water-cooled plate contacts the battery cell 100a and can be used to reduce the temperature of the battery cell 100a to prevent thermal runaway of the battery cell 100a. In some cases, the heating of the battery cell 100a can be achieved by heating the heat exchange medium, so that the battery 100 is in a suitable temperature range.

In the above solution, a thermal management component is set to regulate the temperature of the battery cells 100a, making the battery 100 have higher safety.

When the flow channel 30 in the battery 100 is set in the thermal management component, the main body of the thermal management component can be located in the enclosed space, and a part of the thermal management component can be out of the first box 10 or the second box 20 to achieve that the inlet pipe 31 and outlet pipe 32 are located on the outside of the enclosed space, or the thermal management component is located in the enclosed space, and the inlet pipe 31 and outlet pipe 32 are out of the first box 10 or the second box 20 to be located on the outside of the enclosed space.

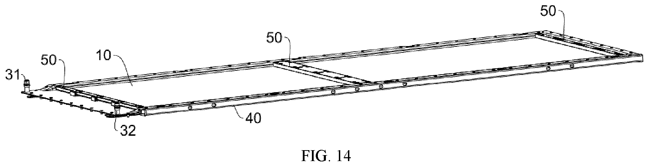

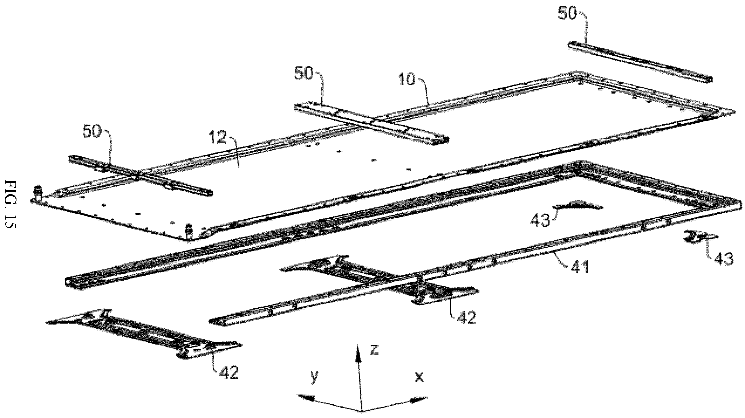

According to some embodiments of the present disclosure, referring to FIGS. 14 and 15, FIG. 14 is a schematic view of the first box 10 and the frame 40 provided in some embodiments of the present disclosure; and FIG. 15 is a three-dimensional exploded view of the first box 10 and the frame 40 provided in some embodiments of the present disclosure.

The battery 100 further comprises a frame 40 provided on one side of the first box 10 facing away from the second box 20, wherein the frame 40 is configured to support the first box 10.

The frame 40 is a component located on one side of the first box 10 away from the second box 20. The frame 40 supports the first box 10 to bear the weight of the first box 10, the battery cell 100a, and the second box 20. In some embodiments, the structural strength of frame 40 is not less than that of the first box 10 to ensure effective support for the first box 10, battery cell 100a, and second box 20.

In the above solution, a frame 40 is set up to support the first box 10, ensuring that the battery 100 has higher structural strength and ensuring the safety of the battery 100.

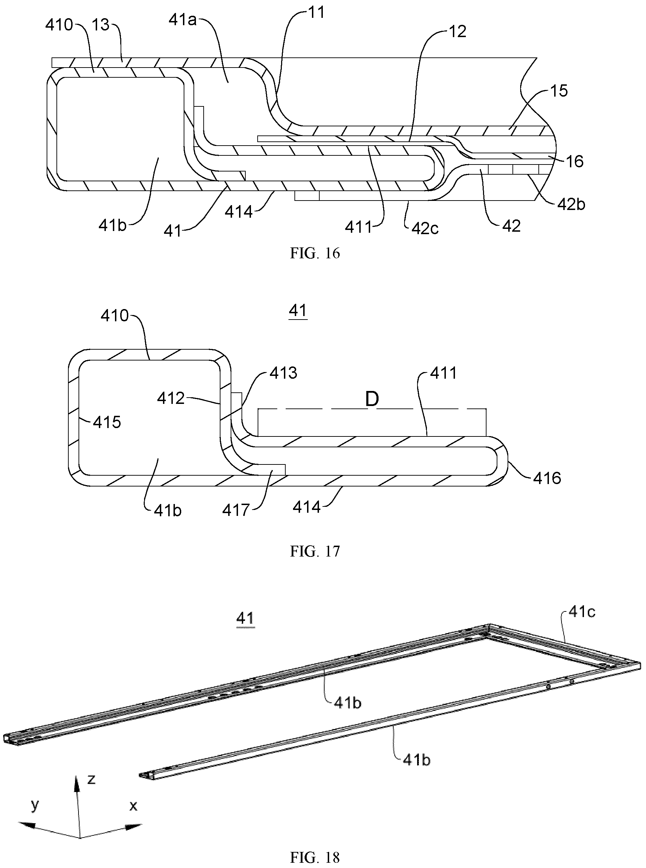

According to some embodiments of the present disclosure, referring to FIGS. 16 and 17, FIG. 16 is a locally sectional view of the edge beam 41 and the first box 10 provided in some embodiments of the present disclosure; and FIG. 17 is a locally sectional view of the frame 40 provided in some embodiments of the present disclosure. The first box 10 further comprises a first flange 13, which extends outward from one end of the first side wall 11 away from the bottom wall 12. The first side wall 11 is connected to the second box 20 through the first flange 13. The frame 40 includes edge beam 41, which is set along the first flange 13, and the first flange 13 overlaps with the edge beam 41.

Combining FIG. 12, setting the first side wall 11 on the bottom wall 12 will make the first box 10 have a certain height. The plane where the first flange 13 is located can be regarded as the highest position of the first box 10. As the first flange 13 extends towards the outer side of the first box 10, the first flange 13, the first side wall 11, and the bottom wall 12 will jointly limit one space with a certain height. Therefore, this space can be used reasonably. At least a portion of the edge beam 41 can be set within the space and support the first flange 13 to prevent the overall height dimension of the battery 100 from being too large due to the setting of the frame 40, causing the center of gravity of the battery 100 to be too high.

In the above solution, the edge is set along the flange of the first box 10, and supports the first flange 13, so as to make reasonable use of the height space caused by the first flange 13 and the first side wall 11 of the first box 10, ensuring that the battery 100 has a lower center of gravity and higher stability.

According to some embodiments of the present disclosure, referring to FIG. 16, a first cavity 41a is formed between the first side wall 11 and the edge beam 41.

The first flange 13 is overlapped on the edge beam 41, and the first side wall 11 is spaced apart from the edge beam 41 to define the first cavity 41a. When the side of the battery 100 is impacted, the impact force will cause the edge beam 41 to deform in the direction of the first cavity 41a, thereby absorbing the energy of the impact and avoiding damage to the battery cell 100a inside the battery 100 due to the impact.

In the above solution, the first cavity 41a formed by the first side wall 11 and edge beam 41 can collapse and absorb energy after the battery 100 is impacted, improving the impact resistance of the battery 100 and making the battery 100 have higher safety.

In other embodiments, there may not be a first cavity 41a between the first side wall 11 and the edge beam 41, and the first side wall 11 may be in surface contact with the edge beam 41 to ensure the structural compactness of the battery 100.

According to some embodiments of the present disclosure, combining FIGS. 16 and 17, the edge beam 41 includes a first support surface 410 and a second support surface 411. Along the thickness direction z of the bottom wall 12, the first support surface 410 protrudes from the second support surface 411, the first flange 13 overlaps with the first support surface 410, and the bottom wall 12 overlaps with the second support surface 411.

Taking battery 100 as a reference, in the direction from the outside of battery 100 to the inside of battery 100, the first support surface 410 and the second support surface 411 are arranged side by side. The first support surface 410 supports the first flange 13, and the second support surface 411 supports the bottom wall 12. The first support surface 410 can be connected to the first flange 13 through fasteners, and the second support surface 411 can be connected to the bottom wall 12 through fasteners.

In the height direction of battery 100, the bottom wall 12 is located below the first flange 13. To ensure the support of the edge beam 41 for the first box 10, the first support surface 410 is higher than the second support surface 411, that is, the first support surface 410 protrudes from the second support surface 411.

Referring to FIG. 17, in some embodiments, the lateral dimension of the second support surface 411 is D, which satisfies the requirement of D ≥ 10mm, such as D being 10mm, 11mm, 12mm, or 13mm. The lateral dimension of the second support surface 411 refers to the dimension along the width direction of the edge beam 41 (the width direction of the edge beam 41 can be understood as the direction from the outside of the battery 100 to the inside of the battery 100), that is, the support dimension of the second support surface 411 to the bottom wall 12 in the direction from the outside of the battery 100 to the inside of the battery 100. By limiting D ≥ 10mm, it is possible to ensure effective support for the first box 10, thereby avoiding excessive local stress on the edge beam 41 and the first box 10, and preventing damage to the edge beam 41 and the first box 10.

In the above solution, the first support surface 410 is used to support the first flange 13, and the second support surface 411 is used to support the bottom wall 12 to ensure the support of the edge beam41 for the first box 10 and to ensure that the battery 100 has higher structural strength.

According to some embodiments of the present disclosure, as shown in FIG. 17, a second cavity 41b is formed inside the edge beam 41.

The interior of edge beam 41 forms a second cavity 41b, which can refer to that the edge beam 41 is of a hollow structure. Its interior is hollow, and after being impacted, it has the function of collapsing and absorbing energy. In some embodiments, the number of second cavities 41b inside the edge beam 41 may not be one, but may be multiple, such as two, three, or four second cavities 41b spaced apart.

In the above solution, the second cavity 41b formed inside the edge beam 41 can collapse and absorb energy after the battery 100 is impacted, improving the impact resistance of the battery 100 and making the battery 100 have higher safety.

In other embodiments, the edge beam 41 can be of a solid structure with no cavities present inside.

According to some embodiments of the present disclosure, the edge beam 41 is formed by bending a plate-shaped component.

In some embodiments, the edge beam 41 may be formed by bending a plate-like component, such as a steel plate, through a bending machine.

In the above solution, the edge beam 41 is formed by bending plate-shaped components, which can improve the manufacturing efficiency of the edge beam 41 and ensure the manufacturing efficiency of the battery 100. Meanwhile, as the edge beam 41 is integrally formed by bending, there is no need for welding and assembly, so as to ensure the structural stability of the edge beam 41.

In some other embodiments of the present disclosure, the edge beam 41 may be integrally formed using a rolling process, such as the steel plate being formed into the edge beam 41 through a rolling press.

In other embodiments of the present disclosure, the edge beam 41 may be formed by welding or bonding multiple plate-shaped or rod-shaped components to each other.

According to some embodiments of the present disclosure, referring to FIG. 17, a second cavity 41b is formed inside the edge beam 41; and the edge beam 41 comprises a first connecting wall 412 bent relatively to the first support surface 410 and a second connecting wall 413 bent relatively to the second support surface 411, wherein the first connecting wall 412 is stacked and welded to the second connecting wall 413.

As shown in FIG. 17, the edge beam 41 includes a first support surface 410, a second support surface 411, a first connecting wall 412, a second connecting wall 413, a bottom edge 414, a first connecting side 415, and a second connecting side 416. The bottom edge 414 is set opposite to the first support surface 410 and the second support surface 411 along the height direction of the battery 100. The first connecting side 415 is bent at the bottom edge 414 and connected to the first support surface 410, and the second connecting side 416 is bent at the bottom edge 414 and connected to the second support surface 411.

In some embodiments, the first connecting wall 412 is bent in the direction towards the bottom edge 414 on the first support surface 410, and the second connecting wall 413 is bent in the direction away from the bottom edge 414 on the first support surface 410. In some other embodiments, the first connecting wall 412 is bent in the direction away from the bottom edge 414 on the first support surface 410, and the second connecting wall 413 is bent in the direction towards the bottom edge 414 on the first support surface 410. In other embodiments, the first connecting wall 412 is bent in the same direction, such as being bent in the direction towards the bottom edge 414, or bent in the direction away from the bottom edge 414.

The first connecting wall 412 and the second connecting wall 413 are stacked and welded to each other, making the edge beam 41 a closed structure with a second cavity 41b inside, thereby ensuring good structural stability of the edge beam 41.

In the above solution, by stacking and welding the first connecting wall 412 bent to the first support surface 410 and the second connecting wall 413 bent to the second support surface 411, the structural strength of the edge beam 41 can be improved, ensuring the support effect on the first box 10.

According to some embodiments of the present disclosure, referring to FIG. 17, the end of at least one of the first connecting wall 412 and the second connecting wall 413 comprises an extension section 417, which extends into the second cavity 41b and abuts against the bottom edge 414 of the edge beam 41, and the bottom edge 414 is arranged opposite to the first support surface 410 and the second support surface 411.

Extension section 417 refers to a structure formed on the first connecting wall 412 and/or the second connecting wall 413. The extension section 417 is located in the second cavity 41b and can form surface contact with the bottom edge 414 and abut against the bottom edge 414.

In some embodiments of the present disclosure, in the height direction of the battery 100, the size of the first connecting wall 412 is larger than that of the second connecting wall 413, the first connecting wall 412 is bent in the direction towards the bottom edge 414, the second connecting wall 413 is bent in the direction away from the bottom edge 414, the second connecting wall 413 abuts and is welded to the surface of the first connecting wall 412, and an extension section 417 is provided at the end of the second connecting wall 413. The extension section 417 is parallel to the bottom edge 414 and fits and abuts against the bottom edge 414. Referring to FIG. 17, the first connecting wall 412 and the extension section 417 separate the second cavity 41b into two sub-cavities.

According to some embodiments of the present disclosure, the extension section 417 abuts against the middle area of the bottom edge 414.

In the above solution, the extension section 417 abuts against the middle area of the bottom edge 414 to ensure even stress on the bottom edge 414 and ensure stable structure of the edge beam 41 to effectively support the first box 10.

According to some embodiments of the present disclosure, the extension section 417 is welded to the bottom edge 414.

In the above solution, the extension section 417 is connected to the bottom edge 414 by welding, making the edge beam 41 stable in structure and effectively supporting the first box 10.

In some other embodiments, the extension section 417 may be bonded to the bottom edge 414 or connected to the bottom edge 414 through fasteners.

According to some embodiments of the present disclosure, the cross-section of edge beam 41 is L-shaped.

The cross-section of edge beam 41 is L-shaped, indicating that the edge beam 41 has a surface supporting the first flange 13 and a surface supporting the bottom wall 12. Due to the first flange 13 being higher than the bottom wall 12, by setting a side beam 41 of L-shaped cross-section, the first box 10 can be effectively supported.

According to some embodiments of the present disclosure, referring to FIG. 18, FIG. 18 is a schematic view of the edge beam 41 provided in some embodiments of the present disclosure.

Edge beam 41 includes a first edge beam 41c and two second edge beams 41d. The two second edge beams 41d are arranged opposite to each other along the second direction y. The first edge beam 41c connects the two second edge beams 41d, and the second direction y is perpendicular to the thickness direction z of the bottom wall 12.

As shown in FIG. 18, edge beam 41 is U-shaped. Combining FIG. 4, the first edge beam 41c corresponds to the first edge 120, and the two second edge beams 41d correspond to the two second edges 121. The second direction y can be the width direction of the first box 10. The first support surface 410 of the first side beam 41c can support the first flange 13 corresponding to the first edge 120, and the first support surface 410 of the second side beam 41d can support the first flange 13 corresponding to the second edge 121.

In some embodiments, the first edge beam 41c and the second edge beams 41d can be independently manufactured and finally connected together by welding or bonding. For example, the first edge beam 41c and the second edge beam 41d can be first manufactured by rolling and then connected together by welding.

In the above solution, the first edge beam 41c and second edge beams 41d are set to correspond to the first edge 120 and second edges 121 of the first box 10, respectively, to ensure the support of the edge beam 41 for the first box 10 and ensure higher safety of the battery 100.

According to some embodiments of the present disclosure, referring to FIG. 15, the frame 40 further comprises a first bracket 42, which connects two second edge beams 41d.

The first bracket 42 is a component that connects two second edge beams 41d to improve the structural strength of edge beam 41. The material of the first bracket 42 and the edge beam 41 can be the same. The first bracket 42 can be connected to two second edge beams 41d by welding, bonding, or fastening.

In some embodiments, the surface of the first bracket 42 is provided with multiple through holes, and the second edge beam 41d is provided correspondingly with multiple through holes. The first bracket 42 is connected to the second edge beam 41d by multiple fasteners passing through the through holes, ensuring the stability of the connection between the first bracket 42 and the second edge beam 41d.

In the above solution, by setting a first bracket 42 to connect the two second edge beams 41d, the structural strength of the frame 40 can be improved, thereby effectively supporting the first box 10.

According to some embodiments of the present disclosure, the first bracket 42 and the first edge beam 41c are spaced apart along the first direction x, with the first direction x, the second direction y, and the thickness direction z of the bottom wall 12 perpendicular to each other.

According to FIG. 15, the first bracket 42 and the first edge beam 41c can both extend along the second direction y, and are spaced apart along the first direction x. The first direction x and the second direction y are perpendicular to each other. The first direction x can be the length direction of the first box 10, and the second direction y can be the width direction of the second box 20.

In the above solution, along the first direction x, the first bracket 42 and the first edge beam 41c are spaced apart and both connected to the second edge beam 41d, which can effectively improve the structural strength of the frame 40 and ensure higher safety of the battery 100.

According to some embodiments of the present disclosure, the first bracket 42 is connected to the ends of two second edge beams 41d away from the first edge beam 41c.

Referring to FIG. 15, the first bracket 42 fixes the end of the second edge beam 41d away from the first edge beam 41c, thereby constraining the end of the second edge beam 41d to ensure the structural stability of the frame 40.

In the above solution, the first bracket 42 is connected to the ends of the two second edge beams 41d far away from the first edge beam 41c, which can effectively improve the structural strength of the frame 40 and ensure that the first edge beam 41c and second edge beams 41d can effectively support the first box 10.

In some embodiments, as shown in FIG. 15, the number of first brackets 42 is two, and the two first brackets 42 are spaced apart along the first direction x, with one first bracket 42 connected to the ends of the two second edge beams 41d away from the first edge beam 41c, and the other first bracket 42 connected to the middle positions of the two second edge beams 41d.

In some embodiments, as shown in FIG. 14, the size of the two ends of the first bracket 42 in the second direction y is larger than that of middle part of the first bracket 42, that is, there are bumps 42a formed at both ends of the first bracket 42, which have a larger size in the first direction x and protrudes from the middle of the first bracket 42. The part where bump 42a protrudes from the middle can correspond to the first region 12a, and bump 42a can protrude in the direction towards the first region 12a to support the bottom surface of the bottom wall 12 corresponding to the first region 12a.

In some embodiments, as shown in FIG. 16, the first bracket 42 has a first support edge 42b and a second support edge 42c, the first support edge 42b protrudes from the second support edge 42c, the first support edge 42b corresponds to the bottom wall 12, and the second support edge 42c supports the bottom edge 414 of the edge beam 41. The first support edge 42b corresponds to the bottom wall 12, which can refer to contact with the bottom wall 12 or a gap existing between the first support edge 42b and the bottom wall 12.

According to some embodiments of the present disclosure, referring to FIGS. 14 and 15, the battery 100 further comprises a cross beam 50, which is set on the bottom wall 12 and separates the enclosed space into multiple accommodating spaces.

Referring to FIG. 15, the cross beam 50 is installed on the bottom wall 12, and extends along the second direction y, thereby dividing the enclosed space into multiple accommodating spaces in the first direction x. The cross beam 50 can also enhance the structural strength of the first box 10.

According to FIG. 14, three cross beams 50 are provided, with three cross beams 50 arranged at intervals along the first direction x. One cross beam 50 at the edge corresponds to the first edge 120, and the other cross beam 50 at the edge corresponds to the intersection between the first region 12a and the second region 12b. The cross beam 50 in the middle separates the second region 12b into two sub-regions, and the battery cells 100a can be set in both sub-regions. The electronic component 100b of battery 100 can be set within the first region 12a.

The cross beam 50 can also be used as an installation beam, that is, the battery cell 100a can be fixed in the enclosed space through the cross beam 50.

In the above solution, the enclosed space is divided into multiple accommodating spaces by setting cross beams 50 to reasonably layout the battery cells 100a and electronic components 100b, ensuring the safety of the battery cells 100a.

According to some embodiments of the present disclosure, referring to FIG. 15, the bottom wall 12 is provided with a through hole, and the first bracket 42 is connected to the cross beam 50 through a fastener penetrating the through hole.

The through hole is a hole structure that passes through the two opposite surfaces of the bottom wall 12 along the thickness direction z of the bottom wall 12. In some embodiments, when a flow channel 30 is formed inside the bottom wall 12, the through hole can be set to avoid the flow channel 30 to prevent leakage of the heat exchange medium inside the flow channel 30 from the through hole. The fastener can be a sealed rivet nut to ensure the sealing between the cross beam 50, the bottom wall 12, and the first bracket 42.

In some embodiments, there may be multiple through holes corresponding to each cross beam 50, and the multiple through holes are provided at intervals in the extension direction of the cross beam 50.

In the above solution, the first bracket 42 is connected to the cross beams 50 through fasteners, which can improve the stability of the connection between the frame 40 and the first box 10, ensuring that the battery 100 has a stable structure and higher safety.

According to some embodiments of the present disclosure, the frame 40 further comprises a second bracket 43, which connects the first edge beam 41c and the second edge beams 41d.

In some embodiments, the second bracket 43 may be triangular and located at the corner of the connection between the first edge beam 41c and the second edge beam 41d, thereby simultaneously connecting the first edge beam 41c and the second edge beam 41d to tighten the first edge beam 41c and the second edge beam 41d. In some other embodiments, the second bracket 43 can also be in the form of a long strip, as long as it can connect the first edge beam 41c and the second edge beam 41d.

In some embodiments, the second bracket 43 may be connected to the first edge beam 41c and the second edge beam 41d by welding, bonding, or fastening. In some embodiments, the material of the second bracket 43 and the edge beam 41 may be the same.

In the above solution, the second bracket 43 connects the first edge beam 41c and second edge beams 41d to ensure the stability of the connection between the first edge beam 41c and the second edge beams 41d, so that the frame 40 has a stable structure and effectively supports the first box 10.

According to some embodiments of the present disclosure, the material of the frame 40 is steel, and the material of the first box 10 is aluminum alloy.

In some embodiments, in order to pursue the lightweight of battery 100 and improve its energy density, the first box 10 can be made of lighter aluminum or aluminum alloy materials. For the convenience of connecting the first box 10 and the second box 20, the first box 10 and the second box 20 can be made of the same material.

When the first box 10 is made of lighter aluminum or aluminum alloy materials, to ensure that the structural strength of the battery 100 meets the requirements, the frame 40 can be made of steel of higher strength.

In the above solution, the material of the first box 10 is aluminum alloy, which ensures that the battery 100 has a lighter weight to improve the weight energy density of the battery 100. On the other hand, to ensure the structural strength of the battery 100, the frame 40 can be made of steel with higher strength.

In some other embodiments, the materials of the first box 10 and the frame 40 are not limited. The first box 10 and the frame 40 can both be made of the same material, such as aluminum, aluminum alloy, or steel.

According to some embodiments of the present disclosure, the present disclosure also provides an energy storing device comprising a battery 100 as described above. In some embodiments, the energy storing device can be an energy storage cabinet, which includes a cabinet body and multiple batteries 100. Multiple batteries 100 are set in the cabinet body and can jointly provide electric energy to the electrical equipment.

According to some embodiments of the present disclosure, the present disclosure also provides an electrical equipment, including a battery 100 mentioned above, wherein the battery 100 is used to provide electrical energy.

According to some embodiments provided in the present disclosure, the present disclosure also provides a battery 100, as shown in FIGS. 3 to 18. The battery 100 includes a battery cell 100a, a first box 10, a second box 20, a sealing member 60, and a frame 40. The material of the first box 10 and the second box 20 is aluminum alloy, and the material of the frame 40 is steel. The first box 10 is the lower box, and the second box 20 is the upper box. The first box 10 and the second box 20 are connected to each other, and the sealing member 60 is set between the first box 10 and the second box 20. The first box 10 and the second box 20 together form an enclosed space, and the battery 100 is accommodated in the enclosed space. The frame 40 is located on one side of the first box 10 away from the second box 20 and supports the first box 10.

The first box 10 includes a bottom wall 12, a first side wall 11, and a first flange 13. The first side wall 11 is set at a partial edge of the bottom wall 12, so that the first box 10 is in a dustpan shape. As shown in FIG. 4, along the length direction of the first box 10, the bottom wall 12 includes a first region 12a and a second region 12b arranged side by side. Along the width direction of the first box 10, the second region 12b will exceed beyond the first region 12a. The first side wall 11 is set at the edge of the first region 12a, and the edge of the second region 12b is not set with the first side wall 11. The first flange 13 extends outward from one end of the first side wall 11 away from the bottom wall 12. The end of the first flange 13 and the part of the second region 12b that exceeds the first region 12a are connected by a transition section 14, wherein the transition section 14 is inclined relative to the bottom wall 12, and the inclination angle between the transition section 14 and the bottom wall 12 is 60°. The number of battery cells 100a can be multiple, and multiple battery cells 100a are set in the first region 12a. The electronic component 100b of battery 100 is set in the second region 12b.

The second box 20 includes a top wall 21, a second side wall 22, and a second flange 23. The second side wall 22 surrounds the edge of the top wall 21, and the size of the part of the second side wall 22 corresponding to the edge of the first region 12a of the bottom wall 12 is larger than that of the part of the second side wall 22 corresponding to the edge of the second region 12b of the bottom wall 12. The second flange 23 extends outward from one end of the second side wall 22 away from the top wall 21. The second flange 23 is attached to the edge of bottom wall 12 without the first side wall 11 (edge of the first region 12a), the first flange 13, and the transition section 14. The sealing member 60 corresponds to the first flange 13 and the second flange 23, ensuring the sealing between the first box 10 and the second box 20.

In the first box 10, the bottom wall 12 comprises a first substrate 15 and a second substrate 16 arranged in layers. The second substrate 16 is provided with a groove 160 on the surface facing the first substrate 15, and the surface facing the second substrate 16 of the first substrate 15 forms a flow channel 30 together with the groove 160. The first side wall 11 and the first flange 13 are integrally formed on the first substrate 15.

At the two corners of the first region 12a, there are an inlet pipe 31 and an outlet pipe 32 respectively. The inlet pipe 31 and outlet pipe 32 are communicated with the flow channel 30, and the heat exchange medium is input into or discharged from the flow channel 30 by connecting the external pipes. The first box 10 can adjust the temperature of the battery cell 100a through heat exchange medium. Referring to FIG. 5, the openings of the inlet pipe 31 and outlet pipe 32 are facing the height direction of the battery cell 100a, so that the external pipes can be plugged in and out using the existing height space of the battery 100. Meanwhile, since the inlet pipe 31 and outlet pipe 32 directly communicate with the flow channel 30, and their opening direction is upward, the flow resistance of the heat exchange medium at the inlet pipe 31 and outlet pipe 32 is relatively small, which can ensure the flow of the heat exchange medium. As shown in FIG. 11, in order to avoid the impact of the inlet pipe 31 and outlet pipe 32 on the sealing between the first box 10 and the second box 20, notches are set at the positions of the second flange 23 corresponding to the inlet pipe 31 and outlet pipe 32 to avoid the inlet pipe 31 and outlet pipe 32.

The frame 40 includes an edge beam 41, a first bracket 42, and a second bracket 43. The shape of the edge beam 41 is consistent with the shape of the first box 10, and the edge beam 41 is U-shaped, and is arranged correspondingly to the first flange 13 of the first box 10. Edge beam 41 utilizes the space below the first flange 13 to support the first flange, in order to reduce the impact of the frame 40 causing the center of gravity of battery 100 to shift upwards. As shown in FIG. 17, the cross-section of edge beam 41 is L-shaped, which includes a first support surface 410 and a second support surface 411. The first support surface 410 supports the first flange 13, and the second support surface 411 supports the bottom wall 12, thereby ensuring support for the first box 10, increasing the joint area between frame 40 and first box 10, and reducing stress. The first support surface 410 can be connected to the first flange 13 through fasteners, and the second support surface 411 can be connected to the bottom wall 12 through fasteners. The width of the second support surface 411 can be greater than or equal to 10mm to ensure the support effect on the first box 10. In some embodiments, the second flange 23 of the second box 20, the first flange 13 and the bottom wall 12 of the first box 10, and the edge beam 41 can be connected together through fasteners.

As shown in FIG. 16, a first cavity 41a is formed between the first side wall 11 and the edge beam 41. The first cavity 41a can collapse and absorb energy when the battery 100 is impacted, ensuring the safety of the battery 100. A second cavity 41b is formed inside the edge beam 41, which can collapse and absorb energy when the battery 100 is impacted, ensuring the safety of the battery 100.

The first bracket 42 and the second bracket 43 are respectively connected to the edge beam 41 to improve the structural strength of the edge beam 41. A cross beam 50 is installed in the first box 10, and is connected to the bottom wall 12. Its function is to increase the strength of the first box 10 and can be used to install the battery 100, so that the battery 100 is fixed in the first box 10. A through hole is provided on the bottom wall 12, and the cross beam 50 is connected to the first bracket 42 through the rivet nut passing the through hole.

The above is only preferred embodiments of the present disclosure and is not intended to limit it. For those skilled in the art, the present disclosure may undergo various modifications and variations. Any modifications, equivalent replacements, improvements, etc. made within the spirit and principles of the present disclosure shall be included within the scope of protection of the present disclosure.

## Claims

1. A battery, comprising:
a battery cell;
a first box; and
a second box, wherein the second box and the first box are connected to jointly form an enclosed space for accommodating the battery cell; and
the first box comprises a first side wall and a bottom wall, wherein the first side wall is connected to the second box, and along a circumference of the bottom wall, the first side wall is of a non-closed structure.

2. The battery according to claim 1, wherein
the second box is connected to an edge of the bottom wall that is not provided with the first side wall.

3. The battery according to claim 1 or 2, wherein
the bottom wall comprises a first region and a second region, wherein the first region and the second region are arranged side by side along a first direction, the first side wall is arranged at an edge of the first region, and an edge of the second region is not provided with the first side wall, wherein the first direction is perpendicular to a thickness direction of the bottom wall.

4. The battery according to claim 3, wherein
the battery further comprises electronic components, wherein the electronic components are accommodated in the enclosed space and at least partially arranged in the second region, and the battery cell is arranged in the first region.

5. The battery according to claim 3 or 4, wherein
the first region comprises a first edge and two second edges, wherein the two second edges are arranged opposite to each other in a second direction, the first edge connects the two second edges, and the first side wall is arranged at the first edge and the two second edges, wherein the second direction is perpendicular to the thickness direction of the bottom wall.

6. The battery according to claim 5, wherein
the two second edges extend along the first direction, wherein the first direction, the second direction, and the thickness direction of the bottom wall are perpendicular to each other.

7. The battery according to claim 5 or 6, wherein
a length of the second edges is greater than a length of the first edge.

8. The battery according to any one of claims 5-7, wherein
the first box further comprises a first flange, wherein the first flange extends outward from one end of the first side wall away from the bottom wall, and the first side wall is connected to the second box through the first flange.

9. The battery according to claim 8, wherein
along the second direction, the second region extends beyond the two second edges; and
the first box further comprises a transition section, wherein an end of the first flange and a portion of the second region beyond the second edges are connected through the transition section.

10. The battery according to claim 9, wherein
the transition section is inclined relatively to the bottom wall.

11. The battery according to claim 10, wherein
an inclination angle of the transition section relative to the bottom wall is α, meeting 0° < α≤ 60°.

12. The battery according to any one of claims 9-11, wherein
the second box comprises a top wall, a second side wall, and a second flange, wherein the second side wall is provided at an edge of the top wall, and the second flange extends outward from one end of the second side wall away from the top wall; and
the second flange comprises a first part, a second part, and a third part, wherein the first part is connected to an edge of the bottom wall that is not provided with the first side wall, the second part is correspondingly arranged with the transition section, and the third part is connected to the first flange.

13. The battery according to any one of claims 9-11, wherein
the second box comprises a top wall, a second side wall, and a second flange, wherein the second side wall is provided at a partial edge of the top wall, and the second flange extends outward from one end of the second side wall away from the top wall; and
the second flange comprises a first part, and a second part, wherein the first part is connected to an edge of the bottom wall that is not provided with the first side wall, the second part is correspondingly arranged with the transition section, and an edge of the top wall that is not provided with the second side wall is connected to the first flange.

14. The battery according to claim 12 or 13, wherein
the second part is inclined relative to the first part.

15. The battery according to any one of claims 12-14, wherein
the second part and the transition section are parallel to each other.

16. The battery according to any one of claims 8-15, wherein
the bottom wall, the first side wall, and the first flange are integrally formed.

17. The battery according to claim 16, wherein
the first box is formed by stamping, die-casting, or bending.

18. The battery according to any one of claims 1-17, wherein
the battery comprises a flow channel for accommodating a heat exchange medium to regulate a temperature of the battery cell; and the battery further comprises an inlet pipe and an outlet pipe, wherein both the inlet pipe and the outlet pipe are communicated with the flow channel, and both the inlet pipe and the outlet pipe are located on an outer side of the enclosed space.

19. The battery according to claim 18, wherein
the inlet pipe and the outlet pipe are both located on one side of the bottom wall facing the second box.

20. The battery according to claim 19, wherein
the inlet pipe and the outlet pipe do not exceed beyond the second box along a direction of the bottom wall towards the second box.

21. The battery according to any one of claims 18-20, wherein
the inlet pipe and the outlet pipe are both inclined or vertically arranged relative to the bottom wall.

22. The battery according to any one of claims 19-21, wherein
the second box comprises a top wall, a second side wall, and a second flange, wherein the second side wall is provided at an edge of the top wall, and the second flange extends outward from one end of the second side wall away from the top wall; and
the second flange is provided with a first avoidance part and a second avoidance part, wherein the inlet pipe and the outlet pipe pass through the first avoidance part and the second avoidance part, respectively.

23. The battery according to claim 22, wherein
the first avoidance part and the second avoidance part are notches arranged at an edge of the second flange.

24. The battery according to any one of claims 18-23, wherein
the flow channel is formed inside the bottom wall, and the inlet pipe and the outlet pipe are both arranged at an edge of the bottom wall that is not provided with the first side wall.

25. The battery according to claim 24, wherein
a connection between the inlet pipe and the bottom wall, and a connection between the outlet pipe and the bottom wall are both located on the outer side of the enclosed space.

26. The battery according to claim 24 or 25, wherein
the inlet pipe and the outlet pipe are respectively provided at two corners of the bottom wall.

27. The battery according to any one of claims 24-26, wherein
the bottom wall comprises a first substrate and a second substrate arranged in a stacked manner, wherein the second substrate is arranged on one side of the first substrate facing away from the second box, and the flow channel is formed between the second substrate and the first substrate.

28. The battery according to claim 27, wherein
the first side wall is connected to the first substrate.

29. The battery according to claim 27 or 28, wherein
a groove is formed on a surface of the second substrate facing the first substrate, and a surface of the first substrate facing the second substrate and the groove jointly form the flow channel.

30. The battery according to any one of claims 18-23, wherein
the battery further comprises a thermal management component, wherein the flow channel is provided in the thermal management component, the thermal management component is provided in the enclosed space, and both the inlet pipe and the outlet pipe are provided in the thermal management component.

31. The battery according to any one of claims 1-30, wherein
the battery further comprises a frame, wherein the frame is provided on one side of the first box facing away from the second box, wherein the frame is configured to support the first box.

32. The battery according to claim 31, wherein
the first box further comprises a first flange, wherein the first flange extends outward from one end of the first side wall away from the bottom wall, and the first side wall is connected to the second box through the first flange; and
the frame comprises an edge beam, wherein the edge beam is arranged along the first flange, and the first flange overlaps with the edge beam.

33. The battery according to claim 32, wherein
a first cavity is formed between the first side wall and the edge beam.

34. The battery according to claim 32 or 33, wherein
the edge beam comprises a first support surface and a second support surface, wherein along a thickness direction of the bottom wall, the first support surface protrudes from the second support surface, the first flange overlaps with the first support surface, and the bottom wall overlaps with the second support surface.

35. The battery according to any one of claims 32-34, wherein
a second cavity is formed inside the edge beam.

36. The battery according to any one of claims 32-35, wherein
the edge beam is formed by bending a plate-shaped component.

37. The battery according to any one of claims 34-36, wherein
a second cavity is formed inside the edge beam; and
the edge beam comprises a first connecting wall bent relatively to the first support surface and a second connecting wall bent relatively to the second support surface, wherein the first connecting wall is stacked and welded to the second connecting wall.

38. The battery according to claim 37, wherein
an end of at least one of the first connecting wall and the second connecting wall comprises an extension section, wherein the extension section extends into the second cavity and abuts against a bottom edge of the edge beam, and the bottom edge is arranged opposite to the first support surface and the second support surface.

39. The battery according to claim 38, wherein
the extension section abuts against a middle area of the bottom edge.

40. The battery according to claim 38 or 39, wherein
the extension section is welded to the bottom edge.

41. The battery according to any one of claims 32-39, wherein
a cross-section of the edge beam is L-shaped.

42. The battery according to any one of claims 32-41, wherein
the edge beam comprises a first edge beam and two second edge beams, wherein the two second edge beams are arranged opposite to each other in a second direction, and the first edge beam connects the two second edge beams, wherein the second direction is perpendicular to a thickness direction of the bottom wall.

43. The battery according to claim 42, wherein
the frame further comprises a first bracket, wherein the first bracket connects the two second edge beams.

44. The battery according to claim 43, wherein
the first bracket and the first edge beam are arranged at intervals along a first direction, wherein the first direction, the second direction, and the thickness direction of the bottom wall are perpendicular to each other.

45. The battery according to claim 43 or 44, wherein
the first bracket is connected to ends of the two second edge beams away from the first edge beam.

46. The battery according to any one of claims 43-45, wherein
the battery further comprises a cross beam, wherein the cross beam is arranged on the bottom wall and separates the enclosed space into multiple accommodating spaces.

47. The battery according to claim 46, wherein
the bottom wall is provided with a through hole, and the first bracket is connected to the cross beam through a fastener penetrating the through hole.

48. The battery according to any one of claims 42-47, wherein
the frame further comprises a second bracket, wherein the second bracket is connected to the first edge beam and the second edge beams.

49. The battery according to any one of claims 31-48, wherein
a material of the frame is steel, and a material of the first box is aluminum alloy.

50. An energy storing device, comprising the battery according to any one of claims 1-49.

51. An electrical equipment, comprising the battery according to any one of claims 1-49, wherein the battery is configured to provide an electric energy.
